# EUROPEAN PATENT APPLICATION

(11) **EP 4 087 193 A1**
(43) Date of publication of application: **09.11.2022**
(21) Application number: 20917545.4
(22) Date of filing: 07.02.2020
(51) Int. Cl.: H04L 12/26

(54) **DATA ANALYSIS METHOD, APPARATUS AND SYSTEM**

(71) Applicant: Huawei Technologies Co., Ltd., Shenzhen, Guangdong 518129 (CN)
(72) Inventor: XIN, Yang, Shenzhen, Guangdong 518129 (CN); LI, Yongcui, Shenzhen, Guangdong 518129 (CN); CHONG, Weiwei, Shenzhen, Guangdong 518129 (CN); WU, Xiaobo, Shenzhen, Guangdong 518129 (CN)
(74) Representative: Gill Jennings & Every LLP
(86) International application number: PCT/CN2020/074514
(87) International publication number: WO 2021/155579

(57) **Abstract**

Embodiments of this application provide a data analytics method, an apparatus, and a system, and relate to the field of communication technologies, to improve a use effect of data analytics information. The method includes: A data analytics network element receives, from a first network element, effect information of data analytics information. The data analytics network element determines updated data analytics information based on the effect information. In this way, the data analytics network element determines, based on the effect information, whether a use effect achieved by using the data analytics information is good or bad, to know whether a data analytics model is accurate. This helps the data analytics network element update the data analytics information in time based on the use effect achieved by using the data analytics information, to obtain the updated data analytics information. In this solution, the data analytics network element may actively update the data analytics information in time based on the effect information, to improve a use effect of the updated data analytics information.

## Description

### TECHNICAL FIELD

Embodiments of this application relate to the field of communication technologies, and in particular, to a data analytics method, an apparatus, and a system.

### BACKGROUND

A network data analytics function (network data analytics function, NWDAF) may provide data analytics information for an NWDAF service consumer (service consumer) (also referred to as an analytics consumer network function (analytics consumer network function)) network element. The analytics consumer network function network element may trigger some execution actions based on the data analytics information, to optimize a network, a slice, a user, a service, and the like. For example, the analytics consumer network function network element is a policy control function (policy control function, PCF) network element, and the data analytics information is average service experience. The NWDAF may observe average service experience of a service, and then notify the average service experience to the PCF network element. Then the PCF network element may adjust a quality of service (quality of service, QoS) parameter of the service based on the average service experience, to ensure service experience.

However, in a conventional technology, the NWDAF does not perceive implementation logic that is of the analytics consumer network function network element and that is based on the data analytics information, and cannot evaluate effect information generated when the analytics consumer network function network element triggers the execution action. Consequently, data analytics information updated by the NWDAF may not satisfy service experience of the analytics consumer network function network element.

### SUMMARY

Embodiments of this application provide a data analytics method, an apparatus, and a system, to improve a use effect of data analytics information.

To achieve the foregoing objective, embodiments of this application provide the following technical solutions.

According to a first aspect, an embodiment of this application provides a data analytics method, including: A data analytics network element receives, from a first network element, effect information of data analytics information. The effect information is obtained by the first network element by evaluating a use effect achieved by using the data analytics information. The data analytics network element determines updated data analytics information based on the effect information.

The effect information is used to describe the use effect of the data analytics information.

In the method provided in this embodiment of this application, the data analytics network element receives, from the first network element, the effect information of the data analytics information. In this way, the data analytics network element determines, based on the effect information, whether the use effect achieved by using the data analytics information is good or bad, to know whether a data analytics model is accurate. This helps the data analytics network element update the data analytics information in time based on the use effect achieved by using the data analytics information, to obtain the updated data analytics information. In this solution, the data analytics network element may actively update the data analytics information in time based on the effect information, to improve a use effect of the updated data analytics information.

In a possible implementation, that the data analytics network element determines updated data analytics information based on the effect information includes: The data analytics network element determines, based on the effect information, that the use effect of the data analytics information is less than or equal to a first preset threshold or a first preset level, and the data analytics network element determines the updated data analytics information based on the effect information.

In a possible implementation, if it is determined, based on the effect information, that the use effect of the data analytics information is greater than or equal to a second preset threshold, the data analytics network element determines that the data analytics information does not need to be updated.

In a possible implementation, the method provided in this embodiment of this application further includes: The data analytics network element receives a first request from the first network element (for example, an analytics consumer network function network element). The first request is used to request the data analytics information. The first request includes a data analytics identifier corresponding to the data analytics information. This helps the data analytics network element determine, based on the first request, to provide the data analytics information for the first network element.

In a possible implementation, before the data analytics network element receives, from the first network element (for example, an analytics consumer network function network element), the effect information of the data analytics information, the method provided in this embodiment of this application further includes: The data analytics network element sends, to the first network element (for example, an analytics consumer network function network element), a first message including a first indication. The first indication is used to indicate the first network element (for example, an analytics consumer network function network element) to feed back the effect information to the data analytics network element. This helps the first network element determine to feed back, to the data analytics network element, the effect information corresponding to the data analytics information.

In a possible implementation, the first message may further include a data analytics identifier corresponding to the data analytics information.

In a possible implementation, the first message further includes one or more of the data analytics information or reporting information, and the reporting information is used to determine a parameter for feeding back the effect information. The reporting information is used to help the first network element (for example, an analytics consumer network function network element) determine the parameter for feeding back the effect information.

In a possible implementation, the method provided in this embodiment of this application further includes: The data analytics network element sends the updated data analytics information to the first network element (for example, an analytics consumer network function network element).

In a possible implementation, before the data analytics network element receives the effect information from the first network element (for example, an analytics effect evaluation network element), the method provided in this embodiment of this application further includes: The data analytics network element sends, to the first network element (for example, an analytics effect evaluation network element), a second message used to request the effect information. The second message includes one or more of a data analytics identifier or reporting information that correspond to the data analytics information, and the reporting information is used to determine a parameter for feeding back the effect information. The data analytics identifier is provided to help the first network element determine a type of data analytics information whose effect information is to be fed back.

In a possible implementation, the method provided in this embodiment of this application further includes: The data analytics network element receives, from the first network element (for example, an analytics effect evaluation network element or an analytics consumer network function network element), a first application scope corresponding to the effect information. The first application scope is a scope that corresponds when the effect information is achieved by using the data analytics information. This helps the data analytics network element determine that the effect information is a use effect achieved by using the data analytics information in the first application scope.

In a possible implementation, the method provided in this embodiment of this application further includes: The data analytics network element determines a second application scope corresponding to the data analytics information. Correspondingly, the second message further includes the second application scope. The second application scope is a scope in which the data analytics information is used. The second application scope corresponding to the data analytics information is carried in the second message, so that the first network element (for example, an analytics effect evaluation network element) determines effect information of the data analytics information in the second application scope. In this case, the first application scope is a subset or a universal set of the second application scope. In other words, the first application scope is a part or all of the second application scope, or the first application scope is included in the second application scope.

In a possible implementation, the method provided in this embodiment of this application further includes: The data analytics network element receives, from a second network element (for example, an analytics consumer network function network element), information about the first network element (for example, an analytics effect evaluation network element). The information about the first network element is used to determine the first network element, and the information about the first network element may be an address or an identifier of the first network element.

In a possible implementation, the method provided in this embodiment of this application further includes: The data analytics network element sends a second indication and/or a third indication to the second network element. The second indication is used to indicate the second network element to provide, for the data analytics network element, the information about the analytics effect evaluation network element, and the third indication is used to indicate the second network element to provide, for the data analytics network element, the second application scope corresponding to the data analytics information.

In a possible implementation, the method provided in this embodiment of this application further includes: The data analytics network element sends the data analytics information to the second network element.

In a possible implementation, that the data analytics network element determines a second application scope corresponding to the data analytics information includes: The data analytics network element receives, from the second network element, the second application scope corresponding to the data analytics information. The second application scope may be obtained by the data analytics network element based on a third application scope sent to the second network element.

In a possible implementation, the second network element is a network element that uses the data analytics information, and the method provided in this embodiment of this application further includes: The data analytics network element sends the updated data analytics information to the second network element.

In a possible implementation, the reporting information includes one or more of the following information: a threshold, a deviation, a periodicity, a time period, or a maximum quantity of reporting times. The threshold is used to indicate to send the effect information when the effect information satisfies the threshold. The deviation is used to indicate a range in which the effect information is allowed to fluctuate around the threshold. When a difference between the effect information and the threshold is outside the deviation range, the effect information is sent. In other words, when the difference between the effect information and the threshold is in the deviation range, the effect information may not be sent. The periodicity is used to indicate to send the effect information based on the periodicity. The time period is used to indicate to send the effect information in the time period. The maximum quantity of reporting times is used to indicate a maximum quantity of times for which the effect information is sent. In this case, the threshold, the deviation, the periodicity, the time period, or the maximum quantity of reporting times may be used in combination. For example, if the reporting information includes the time period and the maximum quantity of reporting times, the reporting information is used to indicate a maximum quantity of times for which the first network element can feed back the effect information in the time period.

In a possible implementation, that the data analytics network element determines updated data analytics information based on the effect information includes: The data analytics network element sends a third message to a third network element based on the first application scope corresponding to the effect information. The third message is used to request data in the first application scope. The data analytics network element receives the data in the first application scope from the third network element. The data analytics network element determines the updated data analytics information based on the data in the first application scope. The data in the first application scope is requested, and the data analytics information is updated based on the data in the first application scope, so that a use effect of the updated data analytics information in the first application scope can be improved.

In a possible implementation, when the data analytics identifier corresponding to the data analytics information is mobility of a terminal, the first network element is an access management network element, the second application scope is a first paging area corresponding to the terminal, and the effect information indicates that the access management network element is capable of paging the terminal in a second paging area.

In a possible implementation, when the data analytics identifier corresponding to the data analytics information is load information of a fourth network element, the first network element is a network repository network element or a network management network element, and the effect information is adjusted load information of the fourth network element or the load information of the fourth network element. The adjusted load information includes increased load information or decreased load information. In this case, the first network element indicates, to the data analytics network element by using the effect information, that the load information of the fourth network element is increased or decreased. It should be understood that when the effect information is the load information of the fourth network element, the data analytics network element may independently determine whether the load information of the fourth network element is increased or decreased. Certainly, the effect information may alternatively be that the load information of the fourth network element does not change.

In a possible implementation, when the data analytics identifier corresponding to the data analytics information is service experience of a service, the first network element is an application function AF network element, and the effect information is adjusted service experience of the service or the service experience of the service. The service experience is used to adjust a quality of service QoS parameter of the service. The adjusted service experience of the service may be improved service experience of the service or worsened service experience of the service. Certainly, if the first network element provides the service experience of the service, the data analytics network element may independently determine, based on the service experience of the service, whether the service experience of the service is improved or worsened. Certainly, the effect information may alternatively be that the service experience of the service does not change.

In a possible implementation, the method provided in this embodiment of this application further includes: The data analytics network element sends a fourth indication to the second network element (for example, an analytics consumer network function network element). The fourth indication is used by the analytics consumer network function network element to subscribe, from the first network element on behalf of the data analytics network element, the effect information of the data analytics information. The fourth indication and the data analytics information may be carried in a same message and sent to the second network element.

According to a second aspect, an embodiment of this application provides a data analytics method. The method includes: A first network element determines effect information of data analytics information. The first network element sends the effect information to a data analytics network element.

In the data analytics method provided in this embodiment of this application, the first network element determines the effect information of the data analytics information, and sends the effect information to the data analytics network element, to assist the data analytics network element in updating the data analytics information based on the effect information, so that a use effect of the data analytics information is improved.

In a possible implementation, the first network element may be an analytics effect evaluation network element or an analytics consumer network function network element.

In a possible implementation, the method provided in this embodiment of this application further includes: The first network element (for example, an analytics consumer network function network element) receives, from the data analytics network element, a first message including a first indication. The first indication is used to indicate the first network element to feed back the effect information to the data analytics network element.

In a possible implementation, the first message further includes one or more of the data analytics information or reporting information, and the reporting information is used to determine a parameter for feeding back the effect information.

For specific content of the reporting information, refer to the descriptions in the first aspect. Details are not described herein again.

In a possible implementation, the method provided in this embodiment of this application further includes: The first network element (for example, an analytics consumer network function network element) receives updated data analytics information from the data analytics network element.

In a possible implementation, the method provided in this embodiment of this application further includes: The first network element (for example, an analytics effect evaluation network element) receives, from the data analytics network element, a second message used to request the effect information. The second message includes one or more of a data analytics identifier of the data analytics information or reporting information, and the reporting information is used to determine a parameter for feeding back the effect information.

In a possible implementation, the second message further includes a second application scope corresponding to the data analytics information. The second application scope is a scope in which the data analytics information is used. This helps the first network element (for example, an analytics effect evaluation network element) determine that the data analytics information is used in the second application scope.

In a possible implementation, the method provided in this embodiment of this application further includes: The first network element (for example, an analytics consumer network function network element or an analytics effect evaluation network element) sends, to the data analytics network element, a first application scope corresponding to the effect information. The first application scope is a scope that corresponds when the effect information is achieved by using the data analytics information. This helps the data analytics network element determine a use effect of the data analytics information in the first application scope.

In a possible implementation, the reporting information includes one or more of the following information: a threshold, a deviation, a periodicity, a time period, or a maximum quantity of reporting times. The threshold is used to indicate to send the effect information when the effect information satisfies the threshold. The deviation is used to indicate a range in which the effect information is allowed to fluctuate around the threshold. When a difference between the effect information and the threshold is outside the deviation range, the effect information is sent. In other words, when the difference between the effect information and the threshold is in the deviation range, the effect information may not be sent. The periodicity is used to indicate to send the effect information based on the periodicity. The time period is used to indicate to send the effect information in the time period. The maximum quantity of reporting times is used to indicate a maximum quantity of times for which the effect information is sent.

It should be noted that, in this embodiment of this application, the threshold, the deviation, the periodicity, the time period, or the maximum quantity of reporting times may be used separately, or may be used in combination. For example, if the reporting information includes the time period and the maximum quantity of reporting times, the reporting information is used to indicate a maximum quantity of times for which the first network element can feed back the effect information in the time period.

In a possible implementation, the method provided in this embodiment of this application further includes: The first network element receives a fourth indication from the data analytics network element. The fourth indication is used by the first network element to subscribe, from the analytics effect evaluation network element on behalf of the data analytics network element, the effect information of the data analytics information. The fourth indication and the data analytics information may be carried in a same message and sent to the first network element. In this case, the first network element may be an analytics consumer network function network element.

According to a third aspect, an embodiment of this application provides a data analytics apparatus. The data analytics apparatus can implement the method according to any one of the first aspect or the possible implementations of the first aspect, and therefore can further implement beneficial effects according to any one of the first aspect or the possible implementations of the first aspect. The data analytics apparatus may be a data analytics network element, or may be an apparatus that can support a data analytics network element in implementing the method according to any one of the first aspect or the possible implementations of the first aspect, for example, a chip used in the data analytics network element. The apparatus may implement the foregoing method by using software, hardware, or hardware executing corresponding software.

In an example, the data analytics apparatus includes a communication unit, configured to receive, from a first network element, effect information of data analytics information. The effect information is obtained by the first network element by evaluating a use effect achieved by using the data analytics information. The data analytics apparatus further includes a processing unit, configured to determine updated data analytics information based on the effect information.

The effect information is used to describe the use effect of the data analytics information.

In a possible implementation, the processing unit is configured to determine, based on the effect information, that the use effect of the data analytics information is less than a preset threshold, and determine the updated data analytics information based on the effect information.

In a possible implementation, before receiving, from the first network element (for example, an analytics consumer network function network element), the effect information of the data analytics information, the communication unit is further configured to send, to the first network element (for example, an analytics consumer network function network element), a first message including a first indication. The first indication is used to indicate the first network element to feed back the effect information to the data analytics network element.

In a possible implementation, the first message further includes one or more of the data analytics information or reporting information, and the reporting information is used to determine a parameter for feeding back the effect information.

In a possible implementation, the first message may further include a data analytics identifier corresponding to the data analytics information.

In a possible implementation, the communication unit is further configured to send the updated data analytics information to the first network element (for example, an analytics consumer network function network element).

In a possible implementation, before receiving the effect information from the first network element (for example, an analytics effect evaluation network element), the communication unit is further configured to send, to the first network element (for example, an analytics effect evaluation network element), a second message used to request the effect information. The second message includes one or more of a data analytics identifier of the data analytics information or reporting information, and the reporting information is used to determine a parameter for feeding back the effect information.

In a possible implementation, the method provided in this embodiment of this application further includes: the communication unit is further configured to receive, from the first network element (for example, an analytics consumer network function network element or an analytics effect evaluation network element), a first application scope corresponding to the effect information. The first application scope is a scope that corresponds when the effect information is achieved by using the data analytics information.

In a possible implementation, the method provided in this embodiment of this application further includes: the processing unit is further configured to determine a second application scope corresponding to the data analytics information. The second message further includes the second application scope. The second application scope is a scope in which the data analytics information is used. The second application scope corresponding to the data analytics information is carried in the second message, so that the first network element (for example, an analytics effect evaluation network element) determines effect information of the data analytics information in the second application scope. In this case, the first application scope is a subset or a universal set of the second application scope. In other words, the first application scope is a part or all of the second application scope, or the first application scope is included in the second application scope.

In a possible implementation, the method provided in this embodiment of this application further includes: the communication unit is further configured to send the data analytics information to a second network element (for example, an analytics consumer network function network element).

In a possible implementation, that the data analytics network element determines a second application scope corresponding to the data analytics information includes: The data analytics network element receives, from the second network element, the second application scope corresponding to the data analytics information. The second application scope may be determined by the second network element based on a third application scope provided by the data analytics network element. The second application scope is a part or all of the third application scope.

In a possible implementation, the second network element is a network element that uses the data analytics information, and the method provided in this embodiment of this application further includes: the communication unit is further configured to send the updated data analytics information to the second network element.

In a possible implementation, the communication unit is further configured to receive, from the second network element, information about the first network element (for example, an analytics effect evaluation network element). The information about the first network element is used to determine the first network element, and the information about the first network element may be an address or an identifier of the first network element.

In a possible implementation, the communication unit is further configured to send a second indication and/or a third indication to the second network element. The second indication is used to indicate the second network element to provide, for the data analytics network element, the information about the analytics effect evaluation network element, and the third indication is used to indicate the second network element to provide, for the data analytics network element, the second application scope corresponding to the data analytics information.

In a possible implementation, the reporting information includes one or more of the following information: a threshold, a deviation, a periodicity, a time period, or a maximum quantity of reporting times. The threshold is used to indicate to send the effect information when the effect information satisfies the threshold. The deviation is used to indicate a range in which the effect information is allowed to fluctuate around the threshold. When a difference between the effect information and the threshold is outside the deviation range, the effect information is sent. The periodicity is used to indicate to send the effect information based on the periodicity. The time period is used to indicate to send the effect information in the time period. The maximum quantity of reporting times is used to indicate a maximum quantity of times for which the effect information is sent. In this case, the threshold, the deviation, the periodicity, the time period, or the maximum quantity of reporting times may be used in combination. For example, if the reporting information includes the time period and the maximum quantity of reporting times, the reporting information is used to indicate a maximum quantity of times for which the first network element can feed back the effect information in the time period.

In a possible implementation, that the data analytics network element determines updated data analytics information based on the effect information includes: The data analytics network element sends a third message to a third network element based on the first application scope corresponding to the effect information. The third message is used to request data in the first application scope. The communication unit receives the data in the first application scope. The processing unit determines the updated data analytics information based on the data in the first application scope. The data in the first application scope is requested, and the data analytics information is updated based on the data in the first application scope, so that a use effect of the updated data analytics information in the first application scope can be improved.

In a possible implementation, when the data analytics identifier corresponding to the data analytics information is mobility of a terminal, the first network element is an access management network element, the second application scope is a first paging area corresponding to the terminal, and the effect information indicates that the access management network element is capable of paging the terminal in a second paging area.

In a possible implementation, when the data analytics information is load information of a fourth network element, the first network element is a network repository network element or a network management network element, and the effect information is adjusted load information of the fourth network element or the load information of the fourth network element. Alternatively, the effect information is that the load information of the fourth network element does not change.

In a possible implementation, when the data analytics information is service experience of a service, the first network element is an application function AF network element, and the effect information is adjusted service experience of the service or the service experience of the service. The service experience is used to adjust a quality of service QoS parameter of the service. Alternatively, the effect information is that the service experience of the service does not change.

In a possible implementation, the communication unit is further configured to send a fourth indication to the first network element (for example, an analytics consumer network function network element). The fourth indication is used by the analytics consumer network function network element to subscribe, from the first network element on behalf of the data analytics network element, the effect information of the data analytics information. The fourth indication and the data analytics information may be carried in a same message and sent to the first network element.

For example, when the data analytics apparatus is a chip or a chip system in the data analytics network element, the processing unit may be a processor, and the communication unit may be a communication interface. For example, the communication interface may be an input/output interface, a pin, or a circuit. The processing unit executes instructions stored in a storage unit, to enable the data analytics network element to implement the data analytics method described in any one of the first aspect or the possible implementations of the first aspect. The storage unit may be a storage unit (for example, a register or a cache) in the chip, or may be a storage unit (for example, a read-only memory or a random access memory) that is in the data analytics network element and that is outside the chip.

According to a fourth aspect, an embodiment of this application provides a data analytics apparatus. The data analytics apparatus can implement the method according to any one of the second aspect or the possible implementations of the second aspect, and therefore can further implement beneficial effects according to any one of the second aspect or the possible implementations of the second aspect. The data analytics apparatus may be a first network element, or may be an apparatus that supports a first network element in implementing the method according to any one of the second aspect or the possible implementations of the second aspect, for example, a chip used in the first network element. The apparatus may implement the foregoing method by using software, hardware, or hardware executing corresponding software.

In an example, the data analytics apparatus includes a processing unit, configured to determine effect information of data analytics information; and a communication unit, configured to send the effect information to a data analytics network element.

In a possible implementation, the communication unit is further configured to receive, from the data analytics network element, a first message including a first indication. The first indication is used to indicate the data analytics apparatus to feed back the effect information to the data analytics network element.

In a possible implementation, the first message further includes one or more of the data analytics information or reporting information, and the reporting information is used to determine a parameter for feeding back the effect information.

For specific content of the reporting information, refer to the descriptions in the first aspect. Details are not described herein again.

In a possible implementation, the communication unit is further configured to receive updated data analytics information from the data analytics network element.

In a possible implementation, the communication unit is further configured to receive, from the data analytics network element, a second message used to request the effect information. The second message includes one or more of a data analytics identifier of the data analytics information or reporting information, and the reporting information is used to determine a parameter for feeding back the effect information.

In a possible implementation, the second message further includes a second application scope corresponding to the data analytics information. This helps the data analytics apparatus determine that the data analytics information is used in the second application scope.

In a possible implementation, the communication unit is further configured to send, to the data analytics network element, a first application scope corresponding to the effect information. The first application scope is a scope that corresponds when the effect information is achieved by using the data analytics information. This helps the data analytics network element determine a use effect of the data analytics information in the first application scope.

In a possible implementation, the reporting information includes one or more of the following information: a threshold, a deviation, a periodicity, a time period, or a maximum quantity of reporting times. The threshold is used to indicate to send the effect information when the effect information satisfies the threshold. The deviation is used to indicate a range in which the effect information is allowed to fluctuate around the threshold. When a difference between the effect information and the threshold is outside the deviation range, the effect information is sent. The periodicity is used to indicate to send the effect information based on the periodicity. The time period is used to indicate to send the effect information in the time period. The maximum quantity of reporting times is used to indicate a maximum quantity of times for which the effect information is sent.

In a possible implementation, the communication unit is further configured to receive a fourth indication from the data analytics network element. The fourth indication is used by the data analytics apparatus to subscribe, from the analytics effect evaluation network element on behalf of the data analytics network element, the effect information of the data analytics information. The fourth indication and the data analytics information may be carried in a same message and sent to the data analytics apparatus.

For example, when the data analytics apparatus is a chip or a chip system in the first network element, the processing unit may be a processor, and the communication unit may be a communication interface. For example, the communication interface may be an input/output interface, a pin, or a circuit. The processing unit executes instructions stored in a storage unit, to enable the first network element to implement the data analytics method described in any one of the second aspect or the possible implementations of the second aspect. The storage unit may be a storage unit (for example, a register or a cache) in the chip, or may be a storage unit (for example, a read-only memory or a random access memory) that is in the first network element and that is outside the chip.

According to a fifth aspect, an embodiment of this application provides a computer-readable storage medium. The computer-readable storage medium stores a computer program or instructions. When the computer program or the instructions is/are run on a computer, the computer is enabled to perform the data analytics method described in any one of the first aspect or the possible implementations of the first aspect.

According to a sixth aspect, an embodiment of this application provides a computer-readable storage medium. The computer-readable storage medium stores a computer program or instructions. When the computer program or the instructions is/are run on a computer, the computer is enabled to perform the data analytics method described in any one of the second aspect or the possible implementations of the second aspect.

According to a seventh aspect, an embodiment of this application provides a computer program product including instructions. When the instructions are run on a computer, the computer is enabled to perform the data analytics method described in any one of the first aspect or the possible implementations of the first aspect.

According to an eighth aspect, an embodiment of this application provides a computer program product including instructions. When the instructions are run on a computer, the computer is enabled to perform the data analytics method described in any one of the second aspect or the possible implementations of the second aspect.

According to a ninth aspect, an embodiment of this application provides a data analytics apparatus, configured to perform the method according to the possible designs of either of the first aspect and the second aspect. The data analytics apparatus may be the foregoing data analytics network element, or an apparatus including the foregoing data analytics network element. Alternatively, the data analytics apparatus may be the foregoing first network element, or an apparatus including the foregoing first network element. The data analytics apparatus includes a corresponding module and unit for implementing the foregoing method. The module and unit may be implemented by hardware, software, or hardware executing corresponding software. The hardware or the software includes one or more modules or units corresponding to the foregoing function.

According to a tenth aspect, an embodiment of this application provides a data analytics apparatus. The data analytics apparatus includes at least one processor and a communication interface. When the data analytics apparatus runs, the processor executes computer-executable instructions stored in the data analytics apparatus, to enable the data analytics apparatus to perform the method according to the possible designs of either of the first aspect and the second aspect. For example, the data analytics apparatus may be a data analytics network element, or a chip used in a data analytics network element. For example, the data analytics apparatus may be a first network element, or a chip used in a first network element.

It should be understood that the data analytics apparatus described in the tenth aspect may further include a bus and a memory. The memory is configured to store code or data. Optionally, the at least one processor, the communication interface, and the memory are coupled to each other.

According to an eleventh aspect, an embodiment of this application provides a data analytics apparatus. The data analytics apparatus includes at least one processor. The at least one processor is coupled to a memory. When the data analytics apparatus runs, the processor executes computer-executable instructions or a program stored in the memory, to enable the data analytics apparatus to perform the method according to any one of the first aspect or the possible designs of the first aspect. For example, the data analytics apparatus may be a data analytics network element, or a chip used in a data analytics network element.

According to a twelfth aspect, an embodiment of this application provides a data analytics apparatus. The data analytics apparatus includes at least one processor. The at least one processor is coupled to the memory. When the data analytics apparatus runs, the processor executes computer-executable instructions or a program stored in the memory, to enable the data analytics apparatus to perform the method according to any one of the second aspect or the possible designs of the second aspect. For example, the data analytics apparatus may be a first network element, or a chip used in a first network element.

According to a thirteenth aspect, an embodiment of this application provides a data analytics apparatus. The data analytics apparatus includes a processor and a storage medium. The storage medium stores instructions. When the instructions are run by the processor, the data analytics method described in the first aspect or the possible implementations of the first aspect is implemented.

According to a fourteenth aspect, an embodiment of this application provides a data analytics apparatus. The data analytics apparatus includes a processor and a storage medium. The storage medium stores instructions. When the instructions are run by the processor, the data analytics method described in the second aspect or the possible implementations of the second aspect is implemented.

According to a fifteenth aspect, an embodiment of this application provides a data analytics apparatus. The data analytics apparatus includes one or more modules, configured to implement the methods according to the first aspect and the second aspect, and the one or more modules may correspond to the steps in the methods according to the first aspect and the second aspect.

According to a sixteenth aspect, an embodiment of this application provides a chip. The chip includes a processor and a communication interface. The communication interface is coupled to the processor. The processor is configured to run a computer program or instructions, to implement the data analytics method described in the first aspect or the possible implementations of the first aspect. The communication interface is configured to communicate with a module other than the chip.

According to a seventeenth aspect, an embodiment of this application provides a chip. The chip includes a processor and a communication interface. The communication interface is coupled to the processor. The processor is configured to run a computer program or instructions, to implement the data analytics method described in the second aspect or the possible implementations of the second aspect. The communication interface is configured to communicate with a module other than the chip.

Specifically, the chip provided in this embodiment of this application further includes a memory, configured to store the computer program or the instructions.

According to an eighteenth aspect, an embodiment of this application provides a communication system. The communication system includes the apparatus according to any one of the third aspect or the possible implementations of the third aspect and the apparatus according to any one of the fourth aspect or the possible implementations of the fourth aspect.

Any apparatus, computer storage medium, computer program product, chip, or communication system provided above is configured to perform the corresponding method provided above. Therefore, for beneficial effects that can be achieved by the apparatus, computer storage medium, computer program product, chip, or communication system provided above, refer to beneficial effects of a corresponding solution in the corresponding method provided above. Details are not described herein again.

### BRIEF DESCRIPTION OF DRAWINGS

FIG. 1 is a schematic diagram of data analytics model optimization according to an embodiment of this application;
FIG. 2 is a schematic diagram of an architecture of a communication system according to an embodiment of this application;
FIG. 3 is a diagram of a 5G network architecture according to an embodiment of this application;
FIG. 4 is a diagram of another 5G network architecture according to an embodiment of this application;
FIG. 5 is a schematic diagram of a structure of a communication device according to an embodiment of this application;
FIG. 6 to FIG. 9A and FIG. 9B are schematic flowcharts of a data analytics method according to an embodiment of this application;
FIG. 10 is a schematic diagram of a structure of a data analytics apparatus according to an embodiment of this application; and
FIG. 11 is a schematic diagram of a structure of a chip according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first network element and a second network element are merely intended to distinguish between different network elements, and are not intended to limit a sequence thereof. A person skilled in the art may understand that the terms such as "first" and "second" do not limit a quantity and an execution sequence, and the terms such as "first" and "second" do not indicate a definite difference.

It should be noted that, in this application, the word "example", "for example", or the like is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

In this application, "at least one" means one or more, and "a plurality of' means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A system architecture and the service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems. In embodiments of this application, an example in which a provided method is applied to an NR system or a 5G network is used for description.

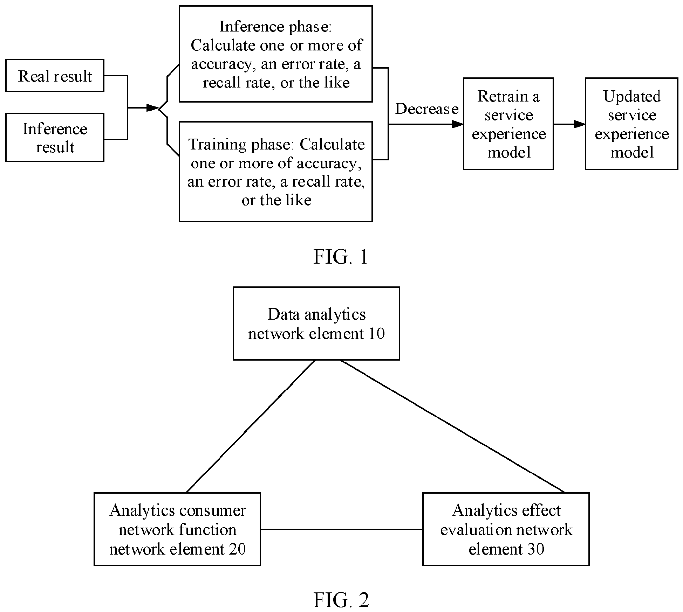

To optimize data analytics information, an NWDAF may continuously obtain new live-network data, and input the obtained live-network data into a trained service experience model, to obtain an inference result. As shown in FIG. 1, the NWDAF then compares the inference result with a real result. Then, the NWDAF determines whether performance (for example, one or more of accuracy, an error rate, or a recall rate) of the service experience model in an inference phase degrades, or the NWDAF determines performance of the service experience model in a training phase. If the NWDAF finds that the performance of the service experience model degrades, the NWDAF may re-collect new live-network data, and then the NWDAF retrains the service experience model based on the new live-network data. The NWDAF then obtains the data analytics information based on an updated service experience model. For example, the NWDAF may update the service experience model and optimize data analytics information of service experience, to minimize a difference between a service experience result output by the service experience model and a real service experience result. However, in this method, because the NWDAF evaluates effect information (for example, an increase value or a decrease value of average service experience) generated when an analytics consumer network function network element triggers an execution action, the data analytics information cannot be updated in time based on the effect information. Consequently, the data analytics information provided for the analytics consumer network function network element may not satisfy service experience of the analytics consumer network function network element. Based on this, an architecture shown in FIG. 2 is introduced in embodiments of this application.

FIG. 2 shows a communication system according to an embodiment of this application. The communication system includes a data analytics network element (for example, an NWDAF network element) 10, and an analytics consumer network function (analytics consumer network function) network element 20 and an analytics effect evaluation (analytics effect evaluation function) network element 30 that communicate with the data analytics network element 10. In a possible implementation, the analytics consumer network function network element 20 may also communicate with the analytics effect evaluation network element 30. The analytics consumer network function network element may also be referred to as a network data analytics function service consumer (NWDAF service consumer) network element or a consumer network function (consumer network function) network element. The analytics effect evaluation network element may also be referred to as an effect information evaluation network element.

The data analytics network element 10 has the following functions: data collection, data analytics (including feature selection, algorithm selection, model training, and the like that are mostly implemented by a vendor) and data analytics (Data Analytics) information determining, and data analytics information feedback (that is, the data analytics network element 10 sends a data analytics result to the analytics consumer network function network element 20).

It should be noted that the data analytics information in this embodiment of this application may also be referred to as a data analytics result, for example, an analytics result output by the data analytics network element 10 based on data analytics.

In an implementation, the data analytics network element 10 in this embodiment of this application may be independently deployed. Certainly, the data analytics network element 10 may alternatively be integrated into a network function (network function, NF) network element, that is, the data analytics network element 10 may be included in the NF network element as a module. In other words, an NF network element has a function of the data analytics network element 10. Certainly, the data analytics network element 10 may alternatively be deployed in a same device with another NF network element. This is not limited in this embodiment of this application. For example, the data analytics network element 10 may be integrated into a session management network element or a user plane network element.

For the data collection, the data analytics network element 10 may collect data from one or more network function (network function, NF) network elements (for example, an access management network element, a session management network element, a user plane network element, and a policy control network element), a network management network element or a network management device, an application network element, and the like. For example, an event exposure (Event Exposure) service of a network element is defined, non (non)-network management data is collected, a bidirectional interface between the data analytics network element 10 and the network management network element is enabled, and bidirectional data exchange between the data analytics network element 10 and the network management network element is allowed. An interface between the data analytics network element 10 and a third-party network element (for example, the application network element) is enabled, and service data is collected. For example, the data analytics network element 10 may collect terminal data (for example, radio channel quality or air interface quality of a terminal, including a reference signal received power (reference signal received power, RSRP), reference signal received quality (reference signal received quality, RSRQ), and a signal to interference plus noise ratio (signal to interference plus noise ratio, SINR)) from the network management network element by using an existing minimization of drive tests (minimization of drive tests, MDT) mechanism.

For the data analytics, the data analytics network element 10 may train a data analytics model, update the data analytics model, and generate data analytics information based on data collected from one or more network elements (for example, various analytics consumer network function network elements shown in Table 1). For a process in which the data analytics network element 10 trains the data analytics model and updates the data analytics model based on the data collected from the one or more network elements, refer to descriptions in a conventional technology. Details are not described herein.

For the data analytics information feedback, for example, a common service is defined, so that the data analytics network element 10 is enabled to feed back the data analytics information to the NF network element, the network management network element, and the application function network element.

The analytics consumer network function network element 20 is configured to trigger a corresponding behavior of a network element based on the data analytics information. The analytics effect evaluation network element 30 is configured to evaluate and provide effect information (effect information) of the data analytics information. It may be understood that, in this embodiment of this application, an example in which a network element that provides the effect information of the data analytics information is the analytics effect evaluation network element 30 is used. Certainly, the network element that provides the effect information of the data analytics information may alternatively have another name (for example, an effect feedback provider (effect feedback provider)). This is not limited in this embodiment of this application.

It may be understood that, in this embodiment of this application, the data analytics network element is a network element that performs data analytics to obtain the data analytics information, and the analytics consumer network function network element 20 is a network element that uses the data analytics information.

It should be noted that when the analytics consumer network function network element 20 has the effect information for determining the data analytics information, the analytics effect evaluation network element 30 may be omitted, that is, the analytics effect evaluation network element 30 is optional. When the analytics consumer network function network element 20 does not have the effect information for determining the data analytics information, the communication system may further include the analytics effect evaluation network element 30.

The analytics consumer network function network element 20 may be one or more of an access management network element, a session management network element, a user plane network element, a policy control network element, a network management network element, or an application network element.

If the communication system is applied to a 5G network, a network element or an entity corresponding to the user plane network element may be a user plane function (user plane function, UPF) network element, a network element or an entity corresponding to the access management network element may be an access and mobility management function (access and mobility management function, AMF) network element, a network element or an entity corresponding to the session management network element may be a session management function (session management function, SMF) network element, a network element or an entity corresponding to the policy control network element may be a policy control function (policy control function) network element, a network element or an entity corresponding to the application network element may be an application function (application function, AF) network element, a network element, an entity, or a service corresponding to the network management network element may be an operation, administration, and maintenance (operation and maintenance) (operation, administration, and maintenance, OAM) network element or service (which may also be referred to as an operation, administration, and maintenance network element or an operation, administration, and maintenance service). In the 5G network, the data analytics network element 10 in this embodiment of this application may be a network data analytics function (network data analytics function, NWDAF) network element in a 5GC, or may be a management data analytics service (management data analytics service, MDAS) of network management, or may even be a data analytics network element or a data analytics entity on a radio access network (radio access network, RAN) side.

In an evolved packet core (evolved packet core, EPC), namely, a 4G core network, a network element or an entity corresponding to the access management network element may be a mobility management entity (mobility management entity, MME). A network element or an entity corresponding to the user plane network element may be a public data network gateway (public data network gateway, PDN GW, PGW) or a serving gateway (serving gateway, SGW). A network element or an entity corresponding to the policy control network element may be a policy and charging rules function (policy and charging rules function, PCRF) unit. In other words, in the 4G core network, the MME has both a session management function and a mobility management function. The data analytics network element 10 may also be referred to as a network data analytics network element in the 4G core network.

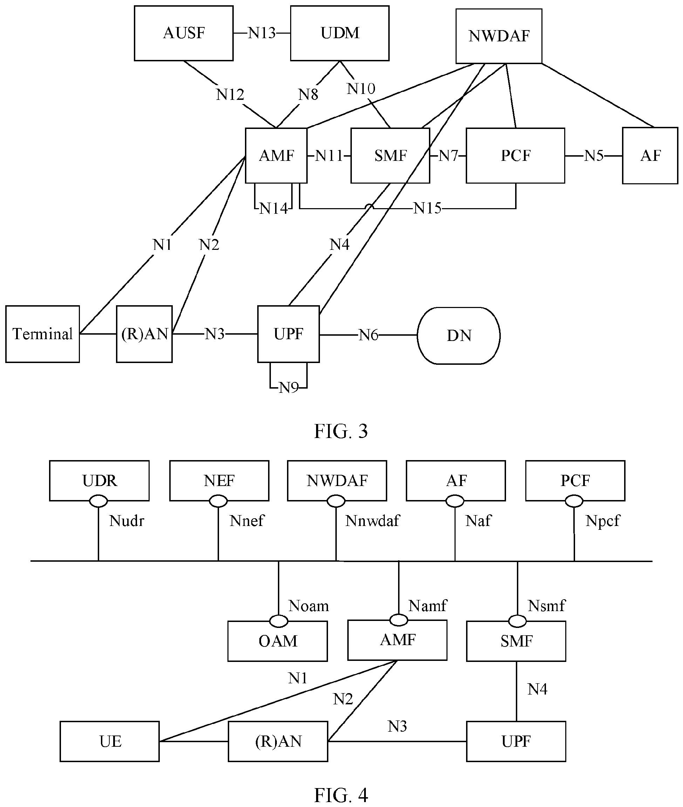

As shown in FIG. 3, in addition to the foregoing core network elements, the 5G network may further include a (radio) access network ((radio) access network, (R)AN), an authentication server function (authentication server function, AUSF) network element, a network slice selection function (network slice selection function, NSSF) network element, a network exposure function (network exposure function, NEF) network element, a user data repository (user data repository, UDR), a unified data management (unified data management, UDM) network element, and a data network (data network, DN). The 5G network may further include a network repository function (network repository function, NRF) network element. The NRF network element is not shown in the diagram of the architecture, and is mainly configured to discover a network element.

The terminal communicates with the AMF network element through an N1 interface (N1 for short). The AMF network element communicates with the SMF network element through an N11 interface (N11 for short). The SMF network element communicates with one or more UPF network elements through an N4 interface (N4 for short). Any two of the one or more UPF network elements communicate with each other through an N9 interface (N9 for short). The UPF network element communicates, through an N6 interface (N6 for short), with the data network (data network, DN) managed and controlled by the AF network element. The terminal accesses the 5G core network (5G Core, 5GC) by using the (R)AN, and the (R)AN communicates with the AMF network element through an N2 interface (N2 for short). The SMF network element communicates with the PCF network element through an N7 interface (N7 for short), and the PCF network element communicates with the AF network element through an N5 interface. The (R)AN communicates with the UPF network element through an N3 interface (N3 for short). Any two AMF network elements communicate with each other through an N14 interface (N14 for short). The SMF network element communicates with the UDM through an N10 interface (N10 for short). The AMF network element communicates with the AUSF through an N12 interface (N12 for short). The AUSF network element communicates with the UDM network element through an N13 interface (N13 for short). The AMF network element communicates with the UDM network element through an N8 interface (N8 for short).

It should be understood that, in the network architecture shown in FIG. 3, control plane network elements in the 5GC may alternatively interact with each other through a service-oriented interface. For example, as shown in FIG. 4, an AMF network element, an SMF network element, a UDM network element, and a PCF network element interact with each other through a service-oriented interface (service-oriented interface). For example, an external service-oriented interface provided by the AMF network element may be an Namf. An external service-oriented interface provided by the SMF network element may be an Nsmf. An external service-oriented interface provided by the UDM network element may be an Nudm. An external service-oriented interface provided by the PCF network element may be an Npcf. It should be understood that for related descriptions of names of various service-oriented interfaces, refer to a diagram of a 5G system architecture (5G system architecture) in a conventional technology. Details are not described herein.

It should be noted that FIG. 3 or FIG. 4 merely provides an example of the UPF network element and the SMF network element. Certainly, FIG. 3 or FIG. 4 may include a plurality of UPF network elements and a plurality of SMF network elements, for example, include an SMF network element 1 and an SMF network element 2. This is not specifically limited in this embodiment of this application.

It should be noted that the (R)AN, the AMF network element, the SMF network element, the UDM network element, the UPF network element, the PCF network element, the authentication service function (authentication server function, AUSF) network element, and the like in FIG. 3 or FIG. 4 are merely names, and the names do not constitute a limitation on a device. In the 5G network and another future network, network elements or entities corresponding to the (R)AN, the AMF network element, the SMF network element, the UDM network element, the UPF network element, and the PCF network element may alternatively have other names. This is not specifically limited in this embodiment of this application. For example, the UDM network element may alternatively be replaced with a home subscriber server (home subscriber server, HSS), a user subscription database (user subscription database, USD), a database entity, or the like. Unified descriptions are provided herein. Details are not described below.

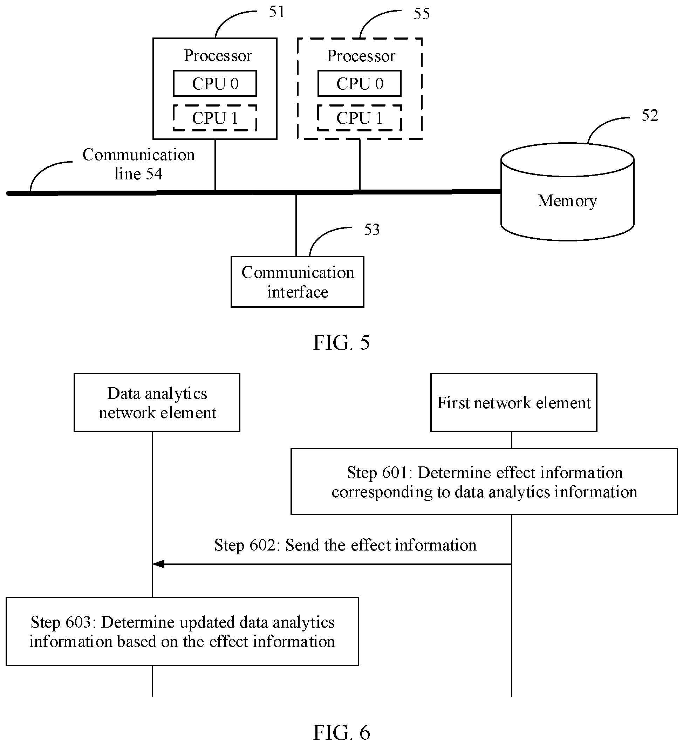

FIG. 5 is a schematic diagram of a structure of a communication device according to an embodiment of this application. For structures of the data analytics network element 10, the analytics consumer network function network element 20, and the analytics effect evaluation network element 30 in embodiments of this application, refer to the schematic diagram of the structure of the communication device shown in FIG. 5. The communication device includes at least one processor 51, a communication line 54, and at least one communication interface (a communication interface 53 is used as an example for description in FIG. 5).

The processor 51 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 54 may include a path for transferring information between the foregoing components.

The communication interface 53 is configured to exchange information with another apparatus. For example, the communication interface 53 may be any apparatus such as a transceiver, and is configured to communicate with another device or a communication network such as the Ethernet, a radio access network (radio access network, RAN), or a wireless local area network (wireless local area network, WLAN).

Optionally, the communication device may further include a memory 52.

The memory 52 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 52 is not limited thereto. The memory may exist independently, and is connected to the processor through the communication line 54. Alternatively, the memory may be integrated with the processor.

The memory 52 is configured to store computer-executable instructions for executing the solutions of this application, and the processor 51 controls the execution. The processor 51 is configured to execute the computer-executable instructions stored in the memory 52, to implement a data analytics method in the following embodiments of this application.

Optionally, the computer-executable instructions in this embodiment of this application may also be referred to as application program code. This is not specifically limited in this embodiment of this application.

In a specific implementation, in an embodiment, the processor 51 may include one or more CPUs, for example, a CPU 0 and a CPU 1 in FIG. 5.

During specific implementation, in an embodiment, the communication device may include a plurality of processors, for example, the processor 51 and a processor 55 in FIG. 5. Each of the processors may be a single-core (single-CPU) processor or a multi-core (multi-CPU) processor. The processor herein may be one or more devices, circuits, and/or processing cores configured to process data (for example, computer program instructions).

In this embodiment of this application, a specific structure of an execution body of a data analytics method is not specifically limited in this embodiment of this application, provided that communication is performed according to the data analytics method by running a program that records code of the data analytics method in this embodiment of this application. For example, the execution body of the data analytics method provided in this embodiment of this application may be a data analytics network element, or a data analytics apparatus, for example, a chip, used in a data analytics network element. This is not limited in this application. Alternatively, the execution body of the data analytics method provided in this embodiment of this application may be a first network element, or a data analytics apparatus, for example, a chip, used in a first network element. This is not limited in this application. The following embodiments are described by using examples in which the execution bodies of the data analytics method are separately the data analytics network element and the first network element.

With reference to the communication system shown in FIG. 2, as shown in FIG. 6, an embodiment of this application provides a data analytics method. The method includes the following steps.

Step 601: A first network element determines effect information (effect information) corresponding to data analytics information.

For example, the first network element may be the analytics consumer network function network element 20 shown in FIG. 2, or the first network element may be the analytics effect evaluation network element 30.

The effect information in this embodiment of this application may be obtained by the first network element by evaluating a use effect achieved by using data analytics information.

For example, the effect information may be a feedback that is of the data analytics information in an actual use process and that is obtained by the first network element by analyzing the data analytics network element 10. For example, with reference to the following Table 1, the data analytics information indicates an access management network element to page UE 1 in a cell 1, a cell 2, and a cell 3. However, in an actual process, the access management network element does not successfully page the UE 1 in the cell 1 and the cell 3, but successfully pages the UE 1 in the cell 2. Therefore, the effect information may be that the UE 1 is not successfully paged in the cell 1 and the cell 3, but is successfully paged in the cell 2. Alternatively, the effect information may be that signal quality that the UE 1 has when the UE 1 is successfully paged in the cell 2 is greater than signal quality that the UE 1 has when the UE 1 is successfully paged in the cell 1.

For another example, the data analytics information may be service experience 1 of a service. If the first network element determines that when the service experience 1 that is of the service and that is provided by the data analytics network element 10 is used, a service requirement (for example, a delay is a delay 1) of the service cannot be satisfied, the effect information may be that the service requirement of the service cannot be satisfied by using the service experience 1. Alternatively, the effect information may be that when the service experience 1 is used, a service delay of the service is a delay 2 (where the delay 2 is greater than the delay 1). The service requirement may be a bandwidth, a delay, a packet loss rate, or the like.

For another example, the data analytics information is scheduling a resource 1 for a first network slice. If the first network element determines that when the resource 1 is scheduled for the first network slice, a slice requirement of the first network slice (for example, the slice requirement of the first network slice is that a quantity of terminals accessing the first network slice is N1) cannot be satisfied, the effect information may be that the service experience 1 cannot satisfy the slice requirement of the first network slice. Alternatively, the effect information may be that when the resource 1 is scheduled for the first network slice, the quantity of terminals accessing the first network slice is N2 (where N2 is less than N1). Alternatively, if the first network element determines that when the resource 1 is scheduled for the first network slice, a quantity of terminals actually accessing the first network slice is less than a quantity of terminals allowed to access the first network slice, the effect information may be reducing the resource scheduled for the first network slice. Alternatively, the first network element may determine that when a resource 2 is used, the quantity of terminals actually accessing the first network slice is close to the quantity of terminals allowed to access the first network slice. In this case, the effect information may be scheduling the resource 2 for the first network slice.

In a specific implementation, in this embodiment of this application, the data analytics network element 10 may actively send the data analytics information to the first network element. Certainly, the data analytics network element may alternatively send the data analytics information to the first network element based on a request that is from the first network element and that is used to request the data analytics information. For content of the data analytics information, refer to content in Table 1.

The following Table 1 shows the content of the data analytics information and corresponding behaviors triggered by the analytics consumer network function network element 20 based on the data analytics information.

**Table 1 Content of data analytics information, and corresponding behaviors triggered by a network element based on the data analytics information**

| | | |
|---|---|---|
| Data analytics identifier (Analytics ID) | Analytics consumer network function network element | Behavior of the network element |
| Slice load level (Slice Load Level) | PCF network element/NSSF network element | Automatic control of a dynamic slice resource (for example, a largest physical resource block (physical resource block, PRB) proportion of a slice on a base station side or a smallest physical resource block resource proportion of the slice) or a service flow (for example, deleting or releasing, from a slice having heavy load, a service flow of a terminal), or selecting an access slice for a terminal |
| Observed service experience (Observed Service Experience) | PCF network element/OAM | Adjusting a quality of service (Quality of Service, QoS) parameter of a service, an air interface resource of a slice (for example, a largest physical resource block or a smallest physical resource block of the slice), and/or a core network resource (for example, a quantity of central processing units (Central Processing Units, CPUs) in the slice, a size of a memory, or a size of a hard disk) |
| Network function network element load (NF Load) | SMF network element/ AMF network element | The SMF network element helps a session of a terminal select a UPF network element based on UPF load. |
| | | The AMF network element helps a session of a terminal select an SMF network element based on SMF load. |
| Network performance (Network Performance) | PCF network element | Determining a background data transfer policy (Background Data Transfer Policy, BDT Policy) |
| Mobility of a terminal (UE Mobility) | AMF network element/ SMF network element | Optimizing a paging area (Paging Area), a registration area (Registration Area), and a serving area (Serving Area), monitoring a movement behavior of a terminal, and selecting, for the terminal, a UPF network |
| Data analytics identifier (Analytics ID) | Analytics consumer network function network element | Behavior of the network element |
| | | element that complies with a movement rule of the terminal |
| Communication of a terminal (UE Communication) | SMF network element | Monitoring a communication behavior of a terminal |
| Abnormal behavior (Abnormal Behavior) | PCF network element | Determining a processing policy for an abnormal terminal |
| User data congestion (User Data Congestion) | AF network element | Assisting an application layer in decision-making based on a user-plane congestion level, for example, a buffer size |
| Quality of service sustainability (QoS Sustainability) | AF network element | Assisting a vehicle-to-everything (V2X) server in decision-making at an application layer based on QoS stability, for example, adjusting an autonomous-driving level |

In this embodiment of this application, the background data (background data, BD) is data generated in a transfer process of service data that has no requirement on (or is insensitive to) transfer timeliness. Alternatively, the background data is data generated in a transfer process of service data that has no requirement on transfer timeliness but has a high requirement on (or is sensitive to) pricing. Alternatively, a network slice used to transfer the background data has no SLA requirement. To be specific, provided that a network allows transfer of the background data, there is no requirement on transfer quality (for example, a transfer delay or a transfer bandwidth). Therefore, the PCF network element may determine to transfer the background data when the network is idle.

In a possible specific implementation, the first network element may actively determine the effect information corresponding to the data analytics information. Alternatively, the data analytics network element 10 may trigger the first network element to determine the effect information corresponding to the data analytics information. This is not limited in this embodiment of this application.

Step 602: The first network element sends the effect information to the data analytics network element 10, and correspondingly, the data analytics network element 10 receives, from the first network element, the effect information of the data analytics information.

In a possible implementation, step 602 may be implemented in the following manner: The first network element sends a first response to the data analytics network element 10, and correspondingly, the data analytics network element 10 receives the first response from the first network element. The first response includes the effect information of the data analytics information. For example, the first response includes a data analytics identifier and the effect information that correspond to the data analytics information.

Step 603: The data analytics network element determines updated data analytics information based on the effect information.

In the method provided in this embodiment of this application, the data analytics network element receives, from the first network element, the effect information of the data analytics information. In this way, the data analytics network element determines, based on the effect information, whether a use effect achieved by using the data analytics information is good or bad, to know whether a data analytics model is accurate. This helps the data analytics network element update the data analytics information in time based on the use effect achieved by using the data analytics information, to obtain the updated data analytics information. In this solution, the data analytics network element may actively update the data analytics information in time based on the effect information, to improve a use effect of the updated data analytics information.

In this embodiment of this application, the first network element may be the analytics consumer network function network element 20 or the analytics effect evaluation network element 30. However, the analytics consumer network function network element 20 may have or may not have a function of evaluating the use effect achieved by using the data analytics information to obtain the effect information. Therefore, when the analytics consumer network function network element 20 may not have the function of evaluating the use effect achieved by using the data analytics information to obtain the effect information, a third-party network element (for example, the analytics effect evaluation network element 30) may be used to provide the effect information. However, in different cases, a process in which the data analytics network element 10 requests the analytics effect evaluation network element 30 to report the effect information is different from a process in which the data analytics network element 10 requests the analytics consumer network function network element 20 to report the effect information. Therefore, descriptions are separately provided below.

Embodiment 1: The first network element is the analytics consumer network function network element 20, and the analytics consumer network function network element 20 has the function of evaluating the use effect achieved by using the data analytics information to obtain the effect information.

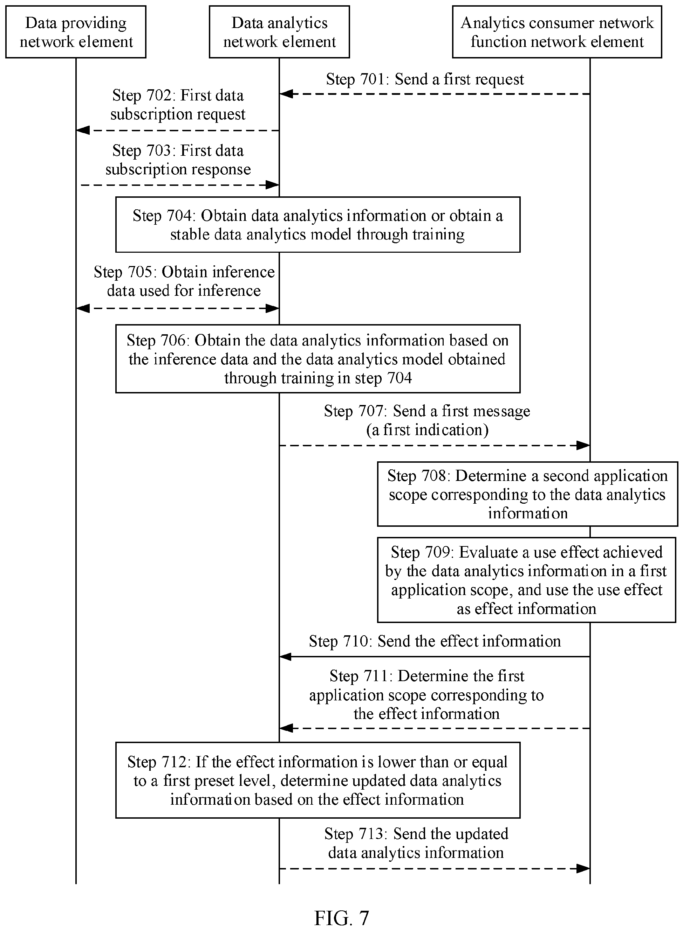

As shown in FIG. 7, an embodiment shown in FIG. 7 is another embodiment of this application described by using an example in which the first network element is the analytics consumer network function network element 20. Step 709 in the embodiment shown in FIG. 7 is used as a possible implementation of step 601 in FIG. 6, step 710 is the same as step 602, and step 712 is used as a possible implementation of step 603. Details are not described herein again.

In a possible embodiment, as shown in FIG. 7, before step 709, the method provided in this embodiment of this application may further include step 701 to step 708.

Step 701: The analytics consumer network function network element 20 sends a first request to the data analytics network element 10, and correspondingly, the data analytics network element 10 receives the first request from the analytics consumer network function network element 20. The first request is used to request the data analytics information.

For example, the first request may carry one or more of the data analytics identifier (Analytics ID), analytics filter information (Analytics Filter), or analytics reporting information (Analytics Reporting Information).

The data analytics identifier is used to identify a type of the data analytics information. For example, the analytics consumer network function network element 20 indicates a type of the data analytics information required by the data analytics network element 10. For example, for details about the data analytics identifier, refer to the descriptions in Table 1. Details are not described herein again.

The analytics filter information (Analytics Filter) indicates a scope of the data analytics information requested by the analytics consumer network function network element 20. For example, the analytics filter information includes one or more of the following: an identifier of a terminal (UE ID), an area (area information), an application identifier (application ID), and a slice identifier (for example, single network slice selection assistance information (single network slice selection assistance information, S-NSSAI)). In this embodiment of this application, when the analytics filter information is an identifier of a terminal (for example, UE 1 to UE 5), it indicates that the scope of the data analytics information requested by the analytics consumer network function network element 20 is the UE 1 to the UE 5.

For example, the identifier of the terminal in this embodiment of this application may be one or more of the following: an internet protocol (internet protocol, IP) address, a subscription permanent identifier (subscription permanent identifier, SUPI), a permanent equipment identifier (permanent equipment identifier, PEI), a generic public subscription identifier (generic public subscription identifier, GPSI), an international mobile subscriber identity (international mobile subscriber identity, IMSI), an international mobile equipment identity (international mobile equipment identity, IMEI), an IP address, and a mobile subscriber integrated services digital network number (mobile subscriber integrated services digital network number, MSISDN). For an identifier of a terminal in the following embodiments, refer to the descriptions herein. Details are not described subsequently again.

For example, the area in this embodiment of this application may be an area in which one or more terminals are located. For example, the area in which the terminal is located may be area information, home area information, or visited area information of the terminal. For example, the area information, the home area information, or the visited area information of the terminal may be one or more of the following information: a tracking area identity (tracking area identity, TAI), a list of tracking area identities (list of TAI(s)), a routing area identity (routing area identity, RAI), a list of routing area identities (list of RAI(s)), a cell identifier (Cell ID), a list of cell identifiers (list of Cell ID(s)), a geographic area identifier (geographical area identifier), network code (network code, NC), country code (country code, CC), city code (city code), and county code (county code). For area information, home area information, or visited area information of a terminal in the following embodiments, refer to the descriptions herein. Details are not described subsequently again.

The analytics reporting information indicates a quantity of times, a time period, a periodicity, a threshold (to be specific, when the data analytics information satisfies the threshold, the data analytics network element 10 feeds back the data analytics information to the analytics consumer network function network element 20), a precision requirement, and the like of the data analytics information requested by the analytics consumer network function network element 20. Certainly, the analytics reporting information may further carry an offset value, and the offset value may be used in combination with the quantity of times, the time period, the periodicity, the threshold, and the like. For example, the quantity of times that is indicated by the analytics reporting information is 5, and the offset value is 1. In this case, a quantity of times for which the data analytics network element may send the data analytics information to the analytics consumer network function network element 20 is 4 to 6. For another example, the time period indicated by the analytics reporting information is from 1:10 a.m. to 2:00 a.m., and the offset value is +10 minutes. In this case, the data analytics network element 10 may send the data analytics information to the analytics consumer network function network element 20 from 1:20 a.m. to 2:10 a.m..

For example, the first request may be an Nnwdaf_AnalyticsSubscnption_Subscribe (analytics information subscription of an NWDAF) service. To be specific, the analytics consumer network function network element 20 triggers the Nnwdaf_AnalyticsSubscription_Subscribe service, to request the data analytics information from the data analytics network element 10.

Step 702: The data analytics network element 10 sends a first data subscription request to a data providing network element. Correspondingly, the data providing network element receives the first data subscription request from the data analytics network element 10. The first data subscription request is used to subscribe to data.

For example, the first data subscription request includes one or more of the following information: an event identifier (Event ID), an event filter (Event Filter), or event reporting information (Event Reporting information).

The event identifier identifies a data type of the data requested by the data analytics network element 10 from the data providing network element, for example, a location of the terminal (UE Location), exception information (exception information) of the terminal, or service experience information (service experience Information).

The event reporting information limits a quantity of times for which the data providing network element collects the data, a time period in which the data providing network element collects the data, and a periodicity at which the data providing network element collects the data.

The event filter limits a scope in which the data providing network element collects the data. For example, the event filter includes one or more of the following information: an identifier (UE ID) 1 of the terminal, a network area (network area) 1, a time period (time period) 1, an application identifier (application ID) 1, and a slice identifier (S-NSSAI).

It should be noted that specific content of the event filter may be determined by the data analytics network element 10 based on the analytics filter information in step 701. The collection scope limited by the event filter may be all or a part of a collection scope described by using the analytics filter information.

The data providing network element in this embodiment of this application may be one or more of the AMF network element, the PCF network element, the AF network element, the UPF network element, the SMF network element, or the OAM shown in Table 1.

In an example, when the data providing network element is one or more of the AMF network element, the PCF network element, the AF network element, the UPF network element, and the SMF network element, the first data subscription request may be an Nnf_EventExposure_Subscribe (event exposure subscription of a network function network element, where for example, another network element may subscribe to data from the network function network element by using the service) service. For example, when the data providing network element is the AMF network element, the first data subscription request may be an Namf_EventExposure_Subscribe (event exposure subscription of the AMF network element) service.

In another example, when the data providing network element is the OAM, the data analytics network element 10 may invoke an existing network management service for collection, for example, a performance management (Performance Management, PM) service, a fault management (Fault Management, FM) service, or an MDT service. Refer to a conventional technology.

Step 703: The data providing network element sends a first data subscription response to the data analytics network element 10. Correspondingly, the data analytics network element 10 receives the first data subscription response from the data providing network element. The first data subscription response includes the data that the data analytics network element 10 requests to subscribe to.

In an example, when the data providing network element is one or more of the AMF network element, the PCF network element, the AF network element, the UPF network element, and the SMF network element, the first data subscription response may be an Nnf EventExposureNotify (an event exposure notification of a network function network element) service.

In another example, if the data providing network element is the OAM, the OAM may send the data to the data analytics network element 10.

Step 704: In a training phase, the data analytics network element 10 obtains the data analytics information through analysis based on the collected data or obtains a data analytics model through training.

For example, as shown in Table 1, the data analytics information may be the UE mobility (UE Mobility) or the UE communication. The UE Mobility may be understood as a movement track of the terminal, and the movement track of the terminal includes one or more locations of the terminal.

For example, the data analytics model may be a service experience (service experience) model or a UE abnormal behavior (UE abnormal behavior) classification model.

It should be noted that if the data analytics network element 10 obtains the data analytics information in step 704, the data analytics network element 10 may send the data analytics information to the analytics consumer network function network element 20 for use, and the data analytics network element 10 does not need to collect new data (New Data, also referred to as inference data (Inference Data). Refer to step 705). If the data analytics network element 10 obtains the data analytics model in step 704, that is, obtains the data analytics model instead of the data analytics information in the training phase, the data analytics network element 10 further needs to obtain new data, and then obtains corresponding data analytics information based on the new data and the data analytics model.

Step 705: The data analytics network element 10 continues to obtain, from the data providing network element, inference data used for inference.

For example, the data analytics model is a service experience model. The data analytics network element 10 continues to obtain, from the data providing network element, network data (for example, QoS flow data of a service on the UPF network element or MDT data of a terminal on a (R)AN) for the service experience model, and terminal behavior data (for example, location information of a terminal on the AMF network element or QoS flow data of a terminal on the UPF network element) for terminal abnormal behavior classification.

Step 706: The data analytics network element 10 obtains the data analytics information based on the inference data and the data analytics model obtained through training in step 704.

It should be noted that if the data analytics network element 10 obtains the data analytics model through analysis based on the collected data in step 704, after performing step 704, the data analytics network element 10 further needs to perform step 705 and step 706. If the data analytics network element 10 obtains the data analytics information through analysis based on the collected data in step 704, step 705 and step 706 may be skipped.

Step 707: The data analytics network element 10 sends a first message to the analytics consumer network function network element 20, and correspondingly, the analytics consumer network function network element 20 receives the first message from the data analytics network element 10.

The first message includes a first indication, and the first indication is used to indicate the analytics consumer network function network element 20 to feed back the effect information to the data analytics network element 10.

In an implementation, the first message in this embodiment of this application has a meaning of indicating the analytics consumer network function network element 20 to send the effect information to the data analytics network element 10. If the first message has the meaning of indicating the analytics consumer network function network element 20 to feed back the effect information to the data analytics network element 10, the first message may not carry the first indication.

In a possible implementation, the first message further includes one or more of the data analytics information or reporting information, and the reporting information is used to determine a parameter for feeding back the effect information. Certainly, the first message may further include a data analytics identifier corresponding to the data analytics information. When the first message further includes the data analytics information, it indicates that the data analytics network element 10 may send the first indication to the analytics consumer network function network element 20 in a process of sending the data analytics information. In other words, the data analytics information and the first indication are carried in a same message (for example, the first message).

When both the first indication and the data analytics information are carried in the first message, the first message may be an Nnwdaf_AnalyticsSubscription Notify (a data analytics information notification of an NWDAF, that is, the NWDAF may send the data analytics information to the first network element by using the service) service or an Nnwdaf AnalyticsInfoRequest response (a data analytics information response of an NWDAF, that is, the NWDAF may send the data analytics information to the first network element by using the service) service.

Certainly, the first indication and the data analytics information may alternatively be sent to the analytics consumer network function network element 20 by using different messages. This is not limited in this embodiment of this application. When the first indication and the data analytics information are sent by using different messages, the first message may be an Nnf_AnalyticsEffectSubscription_Subscribe (a subscription to the effect information of the data analytics information of the network element, that is, the NWDAF or another network element may subscribe to, from the network element by using the service, the effect information of the data analytics information) service, and a message carrying the data analytics information may be an Nnwdaf_AnalyticsSubscription_Notify (a notification of the data analytics information of an NWDAF, that is, the NWDAF may send a data analytics result to another network element by using the service) service.

It should be noted that when the first indication and the data analytics information are sent to the analytics consumer network function network element 20 by using different messages, before step 706, the method provided in this embodiment of this application may further include: The data analytics network element 10 sends the data analytics information to the analytics consumer network function network element 20, and correspondingly, the analytics consumer network function network element 20 receives the data analytics information from the data analytics network element 10.

In a possible example, if the first message does not carry the first indication, but carries one or more of the reporting information or the data analytics information, the analytics consumer network function network element 20 may alternatively determine, based on the first message, to feed back the effect information to the data analytics network element 10.

For example, the reporting information includes one or more of the following information: a threshold, a deviation, a periodicity, a time period, or a maximum quantity of reporting times. The threshold is used to indicate to send the effect information when the effect information satisfies the threshold. The deviation is used to indicate a range in which the effect information is allowed to fluctuate around the threshold. When a difference between the effect information and the threshold is outside the deviation range, the effect information is sent. The periodicity is used to indicate to send the effect information based on the periodicity. The time period is used to indicate to send the effect information in the time period. The maximum quantity of reporting times is used to indicate a maximum quantity of times for which the effect information is sent.

In this embodiment of this application, the parameters, namely, the threshold, the deviation, the periodicity, the time period, or the maximum quantity of reporting times may be used separately, or may certainly be used in combination. For example, if the reporting information includes the time period and the maximum quantity of reporting times, the reporting information is used to indicate a maximum quantity of times for which the first network element can feed back the effect information in the time period.

Step 708: The analytics consumer network function network element 20 determines a second application scope corresponding to the data analytics information.

The second application scope indicates that the analytics consumer network function network element 20 may use, in the second application scope, the data analytics information from the data analytics network element. In other words, the second application scope indicates a scope in which the analytics consumer network function network element 20 uses the data analytics information. For example, the second application scope in this embodiment of this application may be defined as a network area 2, a time period 2, an application identifier 2, a slice identifier 2, a terminal identifier 2, or IP filtering information 2 (used to identify a service flow of a terminal).

In a possible implementation, step 708 in this embodiment of this application may be implemented in the following manner: The analytics consumer network function network element 20 may receive, from the data analytics network element 10, the second application scope corresponding to the data analytics information. In other words, the data analytics network element 10 not only provides the data analytics information for the analytics consumer network function network element 20, but also may provide, for the analytics consumer network function network element 20, the second application scope in which the data analytics information may be used.

In a possible implementation, step 708 in this embodiment of this application may be implemented in the following manner: The data analytics network element 10 provides, for the analytics consumer network function network element 20, a third application scope corresponding to the data analytics information. The analytics consumer network function network element 20 determines the second application scope based on the third application scope. The third application scope includes the second application scope. In other words, the second application scope is a part or all of the third application scope. It should be understood that the data analytics network element 10 may provide, for the analytics consumer network function network element 20, a large application scope (for example, the third application scope) in which the data analytics information is used, and then the analytics consumer network function network element 20 independently determines the second application scope in the third application scope.

Step 709: The analytics consumer network function network element 20 evaluates a use effect achieved by using the data analytics information in a first application scope, and uses the use effect as the effect information. The first application scope is a scope that corresponds when the effect information is achieved by using the data analytics information.

For example, on one hand, the use effect achieved by using the data analytics information in the first application scope may be represented by using "good", "bad", an improvement amplitude, a reduction amplitude, an accuracy rate, a recall rate, an error rate, an F-Score, or the like. Alternatively, the specific effect information may be separately designed for a specific Analytics ID. On the other hand, in a process of feeding back the effect information, the analytics consumer network function network element 20 may further feed back the first application scope corresponding to the effect information to the data analytics network element 10. If the analytics consumer network function network element 20 does not feed back the first application scope corresponding to the effect information to the data analytics network element 10, it indicates that the first application scope corresponding to the effect information is equivalent to content included in the Analytics Filter.

In this embodiment of this application, the first application scope is a subset or a universal set of the second application scope. In other words, the first application scope is a part or all of the second application scope, or the first application scope is included in the second application scope. In other words, the analytics consumer network function network element 20 may use the data analytics information obtained in step 708 in a sub-scope of the second application scope (for example, to determine the first application scope by using a random sampling technology for the second application scope). For example, the first application scope in this embodiment of this application may be defined as a network area 1, a time period 1, an application identifier 1, a slice identifier 1, a terminal identifier 1, or IP filtering information 1 (used to identify a service flow of a terminal). In this case, the network area 1 is included in the network area 2, the time period 1 is included in the time period 2, and the like.

Step 710 is the same as step 602, and details are not described herein again.

It should be noted that if the analytics consumer network function network element 20 receives the reporting information, the analytics consumer network function network element 20 sends the effect information to the data analytics network element 10 based on the reporting information. For example, the analytics consumer network function network element 20 sends the effect information to the data analytics network element 10 based on the periodicity or the time period indicated by the reporting information. Alternatively, the analytics consumer network function network element 20 sends, based on the threshold indicated by the reporting information, the effect information to the data analytics network element 10 when the threshold is reached.

In a possible embodiment, as shown in FIG. 7, after step 709, the method provided in this embodiment of this application may further include the following steps.

Step 711: The analytics consumer network function network element 20 sends, to the data analytics network element 10, the first application scope corresponding to the effect information. Correspondingly, the data analytics network element 10 receives the first application scope from the analytics consumer network function network element 20.

It may be understood that the first application scope corresponding to the effect information and the effect information may be carried in a same message (for example, the first response). Certainly, when the first application scope corresponding to the effect information and the effect information are carried in the same message, step 711 may be skipped.

In addition, the analytics consumer network function network element 20 may further determine, based on the reporting information, the periodicity of reporting the effect information, the time period of reporting the effect information, and the quantity of times for which the effect information is reported.

Further, if the data analytics network element 10 queries the analytics consumer network function network element 20 for the effect information by using the Nnf_AnalyticsEffectSubscription_Subscribe (a subscription to the effect information of the data analytics information of the network element, that is, the data analytics network element 10 or another network element may subscribe to, from the network element by using the service, the effect information of the data analytics information) service, the analytics consumer network function network element 20 may provide, for the data analytics network element 10, the effect information of the data analytics information by using an Nnf_AnalyticsEffectSubscription_Notify (a notification of the effect information of the data analytics information of the network element, that is, the data analytics network element 10 or another network element may subscribe to, from the network element by using the service, the effect information of the data analytics information) service.

Step 712: If the data analytics network element 10 determines that the effect information is lower than or equal to a first preset level, the data analytics network element 10 determines updated data analytics information based on the effect information.

In another possible implementation, if the data analytics network element 10 determines that the effect information is higher than or equal to a second preset level, the data analytics network element 10 determines that the data analytics information does not need to be updated.

For example, a use level of the effect information is high or low. If the data analytics network element 10 determines that the use level of the effect information is high, the data analytics network element 10 determines that the data analytics information does not need to be updated. In this way, data does not need to be re-collected, the data analytics model is optimized, and the data analytics information is further updated. That the use level of the effect information is high indicates that the effect information is higher than or equal to the second preset level. That the use level of the effect information is low indicates that the effect information is lower than or equal to the first preset level. The use level of the effect information may alternatively be represented by using "A and B", "1 and 2", or "good use effect and poor use effect". "A", "1", or "good use effect" indicates high, and "B", "2", or "poor use effect" indicates low. Certainly, the use level of the effect information may alternatively be identified in another manner. This is not limited in this embodiment of this application.

In a possible implementation, in this embodiment of this application, that the data analytics network element 10 determines updated data analytics information based on the effect information may be specifically implemented in the following manner: The data analytics network element 10 sends a third message to a third network element based on the first application scope corresponding to the effect information. The third message is used to request data in the first application scope. The data analytics network element 10 determines the updated data analytics information based on the data in the first application scope. Specifically, on one hand, the data analytics network element 10 updates the data analytics model based on the data in the first application scope, and then re-collects data and inputs the data into an updated data analytics model, to obtain the updated data analytics information. Alternatively, on the other hand, the data analytics network element 10 inputs the data in the first application scope into the data analytics model, to obtain the updated data analytics information.

It may be understood that the third network element may be a network element that provides data for the data analytics network element 10.

For a specific implementation process of updating the data analytics information by the data analytics network element 10, refer to the specific descriptions of step 702 to step 706. Details are not described herein again.

It should be noted that, in this embodiment of this application, an example in which step 707 is performed before step 709 is used in FIG. 7. In this case, the analytics consumer network function network element 20 is triggered by the first message to first determine the effect information, and then send the effect information to the data analytics network element 10. Certainly, step 707 may alternatively be performed between step 709 and step 710, that is, the analytics consumer network function network element 20 sends the effect information to the data analytics network element 10 only when being triggered by the first message.

In this embodiment of this application, the data analytics network element 10 may actively determine the data analytics information. In this case, step 701 may be skipped. Then, the data analytics network element 10 may actively send the data analytics information to the analytics consumer network function network element 20, or certainly may alternatively send the data analytics information to the analytics consumer network function network element 20 when being requested by the analytics consumer network function network element 20. In the embodiment shown in FIG. 7, an example in which the data analytics network element 10 determines the data analytics information when being requested by the analytics consumer network function network element 20 is used.

In a possible embodiment, as shown in FIG. 7, after the data analytics network element 10 obtains the updated data analytics information, the method provided in this embodiment of this application further includes the following step.

Step 713: The data analytics network element 10 sends the updated data analytics information to the analytics consumer network function network element 20. Correspondingly, the analytics consumer network function network element 20 receives the updated data analytics information from the data analytics network element 10.

In a possible implementation, the data analytics identifier corresponding to the data analytics information may be UE Mobility Analytics (namely, a movement track of a terminal), configured to optimize a paging area of the terminal. In this case, the analytics consumer network function network element 20 may be an access management network element, the second application scope is a first paging area corresponding to the terminal, and the effect information indicates that the access management network element is capable of paging the terminal in a second paging area. That is, the first application scope is the second paging area. In other words, the effect information indicates that the data analytics network element 10 optimizes the paging area of the terminal from the first paging area to the second paging area.

It should be understood that the first paging area is a scope that is determined by the data analytics network element 10 based on data analytics and in which the terminal needs to be paged. The second paging area is an area in which the access management network element actually pages the terminal. For example, the first paging area is a TA list (where the TA list includes one or more TAs, and one TA includes dozens of to hundreds of base stations or cells), and the second paging area is a base station list or a cell list. One base station list includes one or more base stations, and one cell list includes one or more cells. The paging area of the terminal is optimized from the TA list (which usually includes hundreds to tens of thousands of base stations or cells, and therefore paging signaling is numerous) to the base station list or the cell list (which usually includes dozens of base stations or cells, and paging signaling is greatly reduced), so that the access management network element can page the terminal in a base station described in the base station list or in a cell described in the cell list. This reduces paging load of the base station and reduces paging signaling of the base station. The access management network element extends the paging area to the TA list only when the access management network element cannot successfully page the terminal in the base station described in the base station list or in the cell described in the cell list.

For example, the access management network element is an AMF network element, and the data analytics network element 10 is an NWDAF. Data analytics information provided by the NWDAF to the AMF network element is UE Mobility Analytics of 10 terminals (it is assumed that the terminals correspond to UE 1 to UE 10). The AMF network element may select UE Mobility Analytics of five terminals (it is assumed that the five terminals are the UE 1 to the UE 5) from the 10 terminals, to update paging areas of the UE 1 to the UE 5, and does not adjust paging areas of the other five terminals (it is assumed that the other five terminals are the UE 6 to the UE 10). The AMF network element updates the paging areas based on the UE Mobility Analytics of the UE 1 to the UE 5. In this case, the AMF network element may (periodically, for example, every day) report, to the NWDAF as effect information, cells (Paged Location for the UE) in which the five terminals are finally paged successfully. If the NWDAF finds, based on the effect information fed back by the AMF network element, that most of the cells (Paged Location for the UE) in which the UE 1 to the UE 5 are finally paged successfully are not in a scope of the UE Mobility Analytics sent by the data analytics network element to the AMF network element in step 706, the NWDAF may further optimize the UE Mobility Analytics, for example, add, to the UE Mobility Analytics, the cell in which the UE is successfully paged, and then send the UE Mobility Analytics to the AMF network element. For example, a paging area that is of the UE 1 and that is included in the scope of the UE Mobility Analytics is a cell 1 and a cell 3, but the AMF network element finally pages the UE 1 successfully in the cell 2. In this case, the NWDAF may also use the cell 1 as the paging area of the UE 1. Further, the NWDAF may find, based on the effect information fed back by the AMF network element, that data of two terminals (the UE 2 and the UE 5) in the UE 1 to the UE 5 needs to be further collected to more accurately determine UE Mobility Analytics of the UE 2 and UE Mobility Analytics of the UE 5. Therefore, the NWDAF separately collects location information of the UE 2 and location information of the UE 5 from AMF network elements serving the UE 2 and the UE 5 (Event ID = Location Changes). The NWDAF finally obtains updated UE Mobility Analytics of the UE 2 based on the location information of the UE 2 and information that is about a cell in which the UE 2 is successfully paged and that is fed back by the AMF network element. In addition, the NWDAF finally obtains updated UE Mobility Analytics of the UE 5 based on the location information of the UE 5 and information that is about a cell in which the UE 5 is successfully paged and that is fed back by the AMF network element. The NWDAF sends the updated UE Mobility Analytics of the UE 5 to the AMF network element corresponding to the UE 5. The NWDAF sends the updated UE Mobility Analytics of the UE 2 to the AMF network element corresponding to the UE 2.

Embodiment 2: The first network element is the analytics effect evaluation network element 30, the second network element is the analytics consumer network function network element 20, and the analytics consumer network function network element 20 does not have the function of evaluating the use effect achieved by using the data analytics information to obtain the effect information.

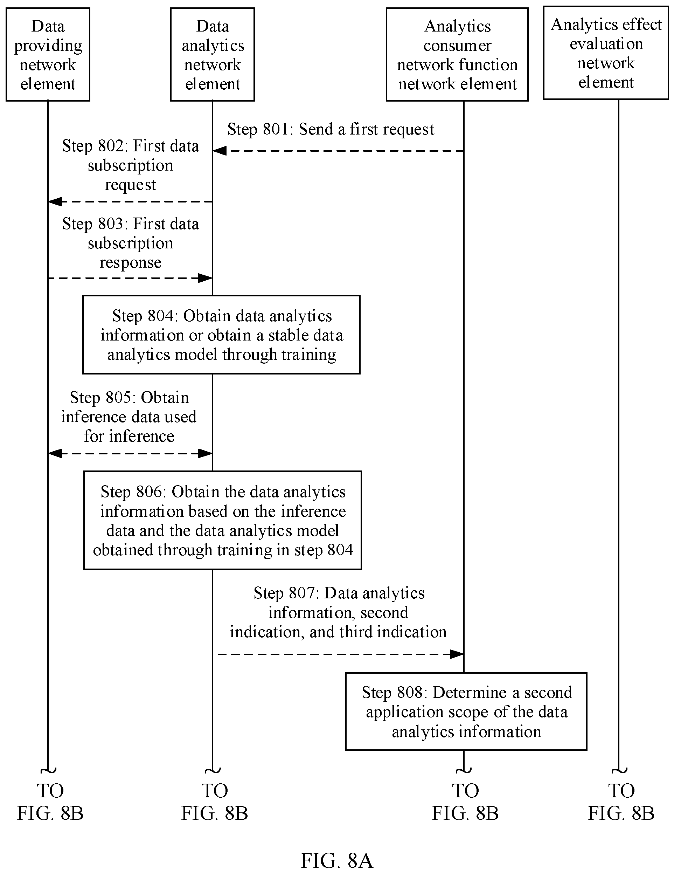

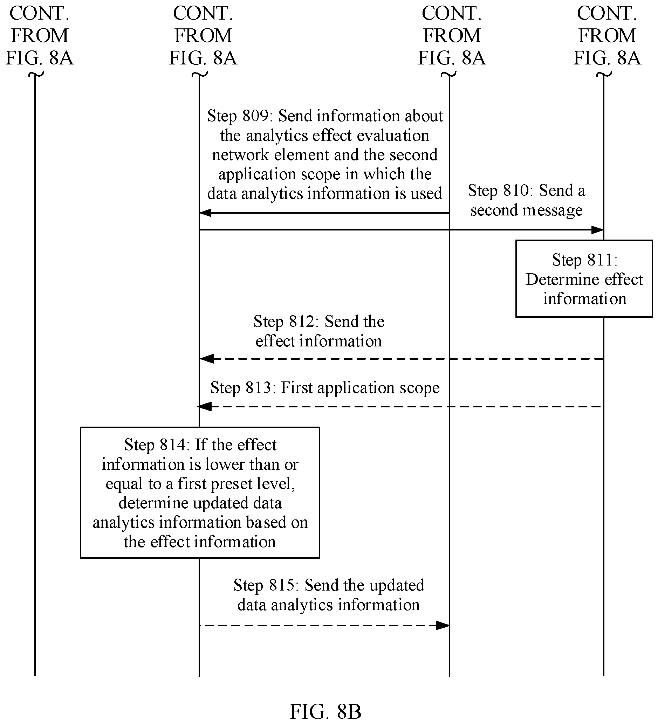

A data analytics method provided in an embodiment of this application is described in FIG. 8A and FIG. 8B. Step 811 in this method corresponds to step 601 in FIG. 6, step 812 corresponds to step 602, and step 814 is used as a possible implementation of step 603. Details are not described herein again. In a possible embodiment, before step 811, the method provided in this embodiment of this application may further include step 801 to step 810.

Step 801 to step 806 are the same as step 701 to step 706, and details are not described herein again.

Step 807: The data analytics network element 10 sends the data analytics information to the analytics consumer network function network element 20.

For example, the data analytics network element 10 sends the data analytics information to the analytics consumer network function network element 20 by using a service-oriented data analytics subscription notification (Nnwdaf_AnalyticsSubscription_Notify) service operation.

In a possible example, the Nnwdaf_AnalyticsSubscription Notify service operation may further carry at least one of a second indication or a third indication. The second indication is used to indicate the analytics consumer network function network element 20 to provide, for the data analytics network element 10, a second application scope in which the data analytics information is used. The third indication is used to indicate the analytics consumer network function network element 20 to provide, for the data analytics network element 10, information about the analytics effect evaluation network element 30.

Certainly, the second indication or the third indication may alternatively be separately sent to the analytics consumer network function network element 20. This is not limited in this embodiment of this application.

The second indication and the third indication in this embodiment of this application may be a same indication. To be specific, the indication has both a function of indicating the analytics consumer network function network element 20 to provide, for the data analytics network element 10, the information about the analytics effect evaluation network element 30 and a function of indicating the analytics consumer network function network element 20 to provide, for the data analytics network element 10, the second application scope in which the data analytics information is used.

It should be noted that if the data analytics network element 10 does not send the third indication to the analytics consumer network function network element 20, the analytics consumer network function network element 20 may alternatively determine, based on the second indication, to provide, for the data analytics network element 10, the information about the analytics effect evaluation network element 30.

Step 808 is the same as step 708, and details are not described herein again.

Step 809: The analytics consumer network function network element 20 sends, to the data analytics network element 10, the information about the analytics effect evaluation network element 30 and the second application scope in which the data analytics information is used.

Step 810: The data analytics network element 10 sends a second message to the analytics effect evaluation network element 30, and correspondingly, the analytics effect evaluation network element 30 receives the second message from the data analytics network element 10.

The second message is used to request effect information. The second message includes one or more of a data analytics identifier or reporting information that correspond to the data analytics information, and the reporting information is used to determine a parameter for feeding back the effect information. Optionally, the second message may further include indication information, and the indication information is used to request the effect information. Certainly, if the second message has a meaning of requesting the effect information, the indication information may be omitted, to reduce signaling overheads.

In a possible implementation, if the data analytics network element 10 further determines the second application scope corresponding to the data analytics information, the second message may further include the second application scope. The second application scope is carried in the second message, so that the analytics effect evaluation network element 30 determines that the data analytics information is used in the second application scope.

It should be noted that the data analytics network element 10 may independently determine the second application scope corresponding to the data analytics information, or may determine, according to the foregoing step 809, the second application scope corresponding to the data analytics information. If the data analytics network element 10 does not determine the second application scope corresponding to the data analytics information, the second message may not carry the second application scope. In this case, the data analytics network element 10 considers by default that a scope corresponding to the data analytics information is an application scope that corresponds to the data analytics information and that is carried when the data analytics network element 10 sends the data analytics information to the analytics consumer network function network element 20 in step 807.

It should be noted that the third indication and a process of sending, by the analytics consumer network function network element 20 to the data analytics network element 10, the second application scope in which the data analytics information is used in step 809 are optional. If the third indication and the process of sending, by the analytics consumer network function network element 20 to the data analytics network element 10, the second application scope in which the data analytics information is used in step 809 are omitted, the data analytics network element 10 considers by default that the Analytics Filter in step 801 is the second application scope. In other words, the data analytics network element 10 considers by default that the analytics consumer network function network element 20 uses the data analytics information in the scope specified by the Analytics Filter.

Step 811: The analytics effect evaluation network element 30 determines the effect information of the data analytics information.

Specifically, if the analytics effect evaluation network element 30 receives the second application scope in which the data analytics information is used, the analytics effect evaluation network element 30 determines the effect information based on the second application scope in which the data analytics information is used. It may be understood that the analytics effect evaluation network element 30 may alternatively determine the data analytics information based on the data analytics identifier.

Step 812: The analytics effect evaluation network element 30 sends the effect information to the data analytics network element 10. Correspondingly, the data analytics network element 10 receives the effect information from the analytics effect evaluation network element 30.

Although the analytics effect evaluation network element 30 receives the second application scope in which the data analytics information is used, when evaluating the use effect achieved by using the data analytics information, the analytics effect evaluation network element 30 may select a part of the second application scope for evaluating the use effect achieved by using the data analytics information. Therefore, as shown in FIG. 8A and FIG. 8B, the method provided in this embodiment of this application may further include the following steps.

Step 813: The analytics effect evaluation network element 30 sends, to the data analytics network element 10, a first application scope corresponding to the effect information.

The first application scope in this embodiment of this application may be a part or all of the second application scope.

Step 814 is the same as step 712, and details are not described herein again.

It should be understood that if the first application scope corresponding to the effect information and the effect information are carried in a same message, step 813 may be skipped.

Step 815 is the same as step 713, and details are not described herein again.

In a possible implementation, in the embodiment shown in FIG. 8A and FIG. 8B, the data analytics identifier corresponding to the data analytics information may be service experience of a service, the service experience of the service is used to adjust a QoS parameter of the service, the analytics effect evaluation network element 30 may be an AF network element, the analytics consumer network function network element 20 may be a PCF network element, and the effect information is adjusted service experience of the service or that the service experience of the service does not change.

For example, the service experience of the service is specifically used to adjust service experience of the service in a network area from an observed first value (for example, 3.0 points) (where the service experience is excessively low and does not satisfy a service requirement) to a second value (for example, 4.0 points), or adjust service experience of the service in a network area from an observed third value (for example, 5.0 points) (where the service experience is excessively high, exceeds the service requirement, and wastes a network resource) to the second value. The first value is less than the second value and less than the third value. Specifically, the adjusted service experience of the service may be improved or increased service experience of the service, or worsened or decreased service experience of the service.

For example, the service is a payment service, and the data analytics network element 10 is an NWDAF. The NWDAF provides, for a PCF network element, service experience that can be used in two network areas (a Network Area 1 and a Network Area 2), namely, a tracking area (Tracking Area, TA) 1 and a TA 2 and that is for the payment service. However, when a terminal uses the payment service in the TA 1 (the Network Area 1), the PCF network element adjusts a QoS parameter of the payment service in the TA 1 based on the service experience, but the PCF network element does not adjust a QoS parameter of the payment service in the TA 2. The PCF network element notifies the NWDAF that an area in which the service experience is used is the TA 1 (corresponding to the second application scope). Because the NWDAF learns, from the PCF network element, that the service experience of the payment service is used in the TA 1, the NWDAF may subscribe, from an AF network element, to an increased value or a decreased value of service experience of each payment service flow in the TA 1, or whether the service experience changes, or to an increased value or a decreased value of average service experience of the payment service in the TA 1, or whether the average service experience changes.

Further, the NWDAF subscribes, from another network element, to network data of using the payment service in the TA 1. For example, the NWDAF obtains, from a UPF network element or a RAN, traffic information (for example, a bandwidth, a delay, jitter, and a packet loss rate) corresponding to a service flow of the payment service, and obtains, from an OAM, MDT data when the terminal uses the payment service. The NWDAF retrains a service experience model based on the network data and MDT data that are collected, and generates updated observed service experience data analytics information (Observed Service Experience Analytics, OSE Analytics) based on an updated service experience model. The NWDAF sends the updated observed service experience data analytics information to the PCF network element, and the PCF network element determines to re-update the QoS parameter of the payment service in the TA 1 or the TA 2.

In the embodiment shown in FIG. 8A and FIG. 8B, because the analytics consumer network function network element 20 cannot determine the use effect of the data analytics information, the analytics consumer network function network element 20 may provide, for the analytics consumer network function network element 20, the scope (for example, the second application scope) in which the data analytics information is used, and the data analytics network element 10 subscribes to the effect information from the analytics effect evaluation network element 30.

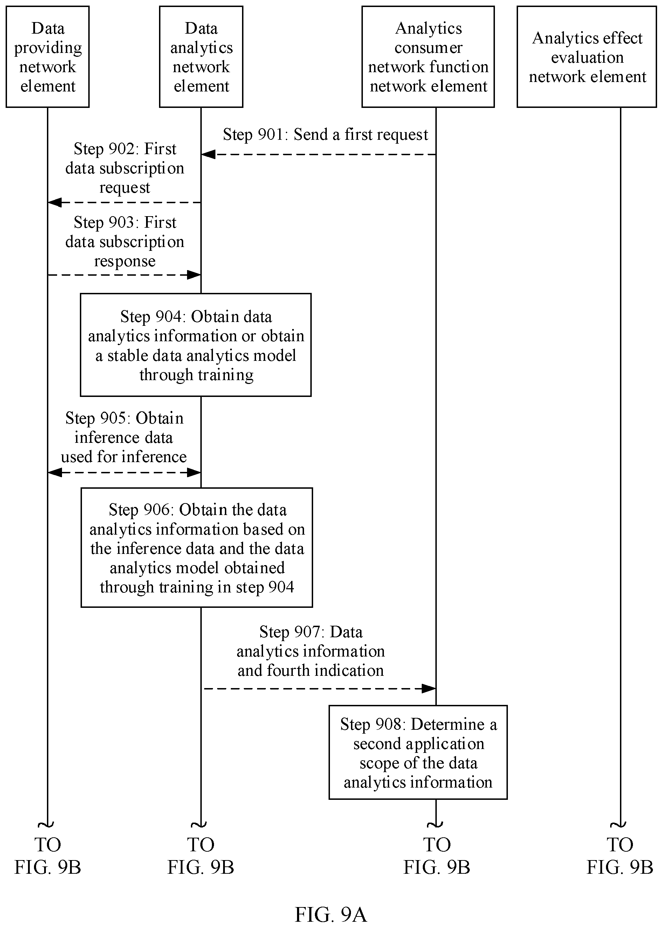

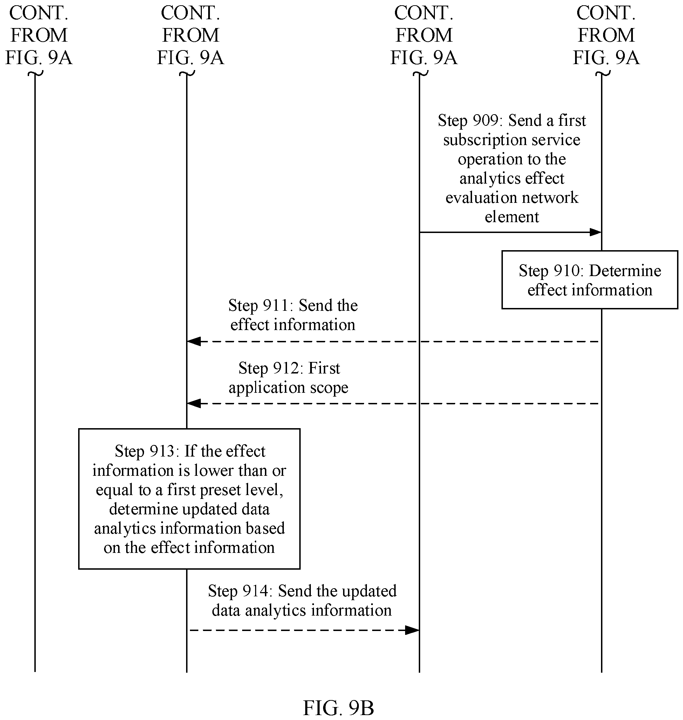

Embodiment 3: An example in which the first network element is the analytics effect evaluation network element 30, the second network element is the analytics consumer network function network element 20, the analytics consumer network function network element 20 does not have the function of evaluating the use effect achieved by using the data analytics information to obtain the effect information, and the analytics consumer network function network element 20 subscribes, on behalf of the data analytics network element 10, the effect information from the analytics effect evaluation network element 30 is used in FIG. 9A and FIG. 9B to show another data analytics method provided in an embodiment of this application. In the method shown in FIG. 9A and FIG. 9B, step 910 corresponds to step 601, step 911 corresponds to step 602, and step 913 is a possible implementation of step 603. Specifically, the method includes the following steps.

Step 901 to step 906 are the same as step 701 to step 706, and details are not described herein again.

Step 907: The data analytics network element 10 sends the data analytics information and a fourth indication to the analytics consumer network function network element 20. Correspondingly, the analytics consumer network function network element 20 receives the data analytics information and the fourth indication from the data analytics network element 10.

The fourth indication is used to indicate the analytics consumer network function network element 20 to subscribe, from the analytics effect evaluation network element 30 on behalf of the data analytics network element 10, effect information of the data analytics information.

In this embodiment, an example in which the fourth indication and the data analytics information is carried in a same message is used. Certainly, the fourth indication and the data analytics information may alternatively be carried in different messages and sent to the analytics consumer network function network element 20. Details are not described herein.

Step 908 is the same as step 708, and details are not described herein again.

Step 909: The analytics consumer network function network element 20 sends a first subscription service operation to the analytics effect evaluation network element 30, and correspondingly, the analytics effect evaluation network element 30 receives the first subscription service operation from the analytics consumer network function network element 20. The first subscription service operation is used to subscribe to the effect information of the data analytics information.

For example, the first subscription service operation may be Nnf_AnalyticsEffectSubscription_Subscribe. The first subscription service operation may carry information about the data analytics network element 10, a data analytics identifier corresponding to the data analytics information, and the second application scope corresponding to the data analytics information. It may be understood that the second application scope corresponding to the data analytics information in the first subscription service operation may be optional.

Step 910 to step 914 are the same as step 811 to step 815, and details are not described herein again.

For example, the data analytics identifier corresponding to the data analytics information is load information of a fourth network element (for example, a UPF network element), the analytics effect evaluation network element 30 is a network repository network element or a network management network element, and the effect information is adjusted load information of the fourth network element or the load information of the fourth network element. For example, an NWDAF may provide, for an SMF network element, UPF load (Load) information of a plurality of UPFs in an area (that is, load of the UPFs, where larger Load indicates heavier load). When a terminal establishes a PDU session (Session) in the area, the SMF network element may select, from the plurality of UPFs, a UPF network element whose load is less than a load threshold to serve the terminal. This relieves load of a UPF network element whose load is greater than the load threshold in the area.

With reference to the foregoing example, a specific data analytics process in this embodiment of this application is as follows: The SMF network element obtains, from the NWDAF, load information that is of a plurality of UPFs and that can be used in two areas (a Network Area 1 and a Network Area 2), namely, a TA 1 and a TA 2. Only when the terminal establishes a PDU session in the TA 1 (the Network Area 1), a UPF network element whose load is less than a load threshold is selected based on a size of the UPF load, to serve the PDU session. However, the TA 2 is not adjusted. If the NWDAF determines that the SMF network element uses the load information of the plurality of UPFs in the TA 1, the NWDAF may subscribe, from a network repository network element or a network management network element, to an increased value or a decreased value of the UPF load in the TA 1. If the improved value that is fed back by the network repository network element or the network management network element and that is of the UPF load in the TA 1 is greater than or equal to a first threshold, the NWDAF may determine to update UPF Load Analytics sent to the SMF network element, so that the UPF network element in the TA 1 is not selected for a session of a newly accessed terminal, to reduce load of the UPF network element in the TA 1.

Further, the NWDAF may subscribe, from the network repository network element or the network management network element, to network data that affects the UPF Load Analytics in the TA 1, for example, obtain a UPF status (REGISTERED (registered in the NRF), SUSPENDED (registered in the NRF, but cannot be operated, and cannot be discovered by another network element), or UNDISCOVERABLE (registered with the NRF, can be operated, but cannot be discovered by another network element)) from the network repository network element, and obtain resource utilization and resource configuration information of the UPF network element from an OAM. Then, the NWDAF regenerates updated load information of the plurality of UPF network elements in the TA 1 based on the resource utilization and the resource configuration information of the UPF network element and the UPF status. The NWDAF sends the updated load information of the plurality of UPF network elements in the TA 1 to the SMF network element, to help the SMF network element reselect a UPF network element for a new session in the area.

It may be understood that, in the embodiment shown in FIG. 8A and FIG. 8B or FIG. 9A and FIG. 9B, the analytics effect evaluation network element 30 may first send the effect information to the analytics consumer network function network element 20, and the analytics consumer network function network element 20 then sends the effect information to the data analytics network element 10. This is not limited in this embodiment of this application.

The foregoing mainly describes the solutions in embodiments of this application from a perspective of interaction between network elements. It may be understood that, to implement the foregoing functions, the network elements such as the data analytics network element, the analytics consumer network function network element, and the analytics effect evaluation network element each include a corresponding hardware structure and/or a software module for performing each function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the data analytics network element, the analytics consumer network function network element, and the analytics effect evaluation network element may be divided into function units based on the foregoing method examples. For example, each function unit may be obtained through division based on a corresponding function, or two or more functions may be integrated into one processing unit. The integrated unit may be implemented in a form of hardware, or may be implemented in a form of a software function unit. It should be noted that, in embodiments of this application, unit division is an example, and is merely logical function division. During actual implementation, another division manner may be used.

The foregoing describes the methods in embodiments of this application with reference to FIG. 6 to FIG. 9A and FIG. 9B. The following describes a data analytics apparatus that is provided in an embodiment of this application and that performs the foregoing methods. A person skilled in the art may understand that the methods and the apparatus may be combined and referenced with each other, and the data analytics apparatus provided in this embodiment of this application may perform the steps performed by the data analytics network element, the analytics consumer network function network element, and the analytics effect evaluation network element in the foregoing analytics methods.

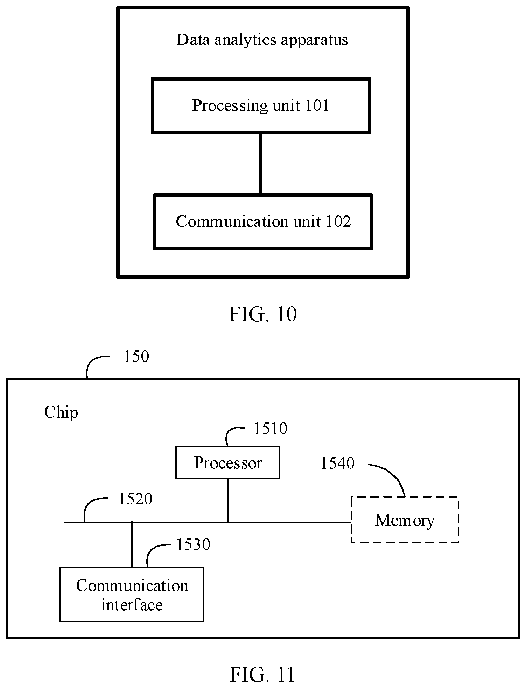

FIG. 10 shows the data analytics apparatus in the foregoing embodiment. The data analytics apparatus may include a communication unit 102 and a processing unit 101.

In a possible implementation, the communication unit may include a receiving unit and a sending unit. The receiving unit is configured to receive a signal, and the sending unit is configured to send a signal.

In an example, the data analytics apparatus is a data analytics network element or a chip used in a data analytics network element. In this case, the communication unit 102 is configured to support the data analytics apparatus in communicating with an external network element, for example, performing a signal receiving and sending operation of the data analytics network element 10 in the foregoing method embodiments. The processing unit 101 is configured to perform a signal processing operation of the data analytics network element 10 in the foregoing method embodiments. For example, the communication unit 102 is configured to perform a receiving action performed by the data analytics network element in step 602 in FIG. 6 in the foregoing embodiment. The processing unit 101 is configured to support the data analytics apparatus in performing an action performed by the data analytics network element in step 603 in FIG. 6.

In a possible embodiment, the communication unit 102 is further configured to support the data analytics apparatus in performing a receiving action performed by the data analytics network element in step 701, step 703, step 705, step 710, and step 711 in the foregoing embodiment. The communication unit 102 is further configured to support the data analytics apparatus in performing a sending action performed by the data analytics network element in step 702, step 707, and step 713 in the foregoing embodiment. The processing unit 101 is further configured to support the data analytics apparatus in performing an action performed by the data analytics network element in step 704, step 706, and step 712 in the foregoing embodiment.

In another example, the data analytics apparatus is an analytics consumer network function network element or a chip used in an analytics consumer network function network element. In this case, the communication unit 102 is configured to support the data analytics apparatus in communicating with an external network element, for example, performing a signal receiving and sending operation of the analytics consumer network function network element 20 in the foregoing method embodiments. The processing unit 101 is configured to perform a signal processing operation of the analytics consumer network function network element 20 in the foregoing method embodiments. For example, the processing unit 101 is configured to support the data analytics apparatus in performing an action performed by the first network element in step 601 in the foregoing embodiment, and the communication unit 102 is configured to support the data analytics apparatus in performing a sending action performed by the first network element in step 602 in the foregoing embodiment.

In a possible embodiment, the communication unit 102 is further configured to support the data analytics apparatus in performing a sending action performed by the analytics consumer network function network element in step 701, step 710, and step 711 in the foregoing embodiment. The processing unit 101 is further configured to support the data analytics apparatus in performing step 708 and step 709 in the foregoing embodiment. The communication unit 102 is further configured to support the data analytics apparatus in performing a receiving action performed by the analytics consumer network function network element in step 707 and step 713 in the foregoing embodiment.

In another example, the data analytics apparatus is an analytics effect evaluation network element or a chip in an analytics effect evaluation network element. In this case, the communication unit 102 is configured to support the data analytics apparatus in communicating with an external network element, for example, performing a signal receiving and sending operation of the analytics effect evaluation network element 30 in the foregoing method embodiments. The processing unit 101 is configured to perform a signal processing operation of the analytics effect evaluation network element 30 in the foregoing method embodiments. For example, the processing unit 101 is configured to support the data analytics apparatus in performing an action performed by the first network element in step 601 in the foregoing embodiment, and the communication unit 102 is configured to support the data analytics apparatus in performing a sending action performed by the first network element in step 602 in the foregoing embodiment.

In a possible embodiment, the communication unit 102 is further configured to support the data analytics apparatus in performing a receiving action performed by the analytics effect evaluation network element in step 810 in the foregoing embodiment and support the data analytics apparatus in performing a sending action performed by the analytics effect evaluation network element in step 812 and step 813 in the foregoing embodiment.

In a possible embodiment, the communication unit 102 is further configured to support the data analytics apparatus in performing a receiving action performed by the analytics effect evaluation network element in step 909 in the foregoing embodiment and support the data analytics apparatus in performing a sending action performed by the analytics effect evaluation network element in step 911 and step 912 in the foregoing embodiment.

When an integrated unit is used, the communication unit shown in FIG. 10 may be alternatively replaced with a communication module, and the processing unit may be alternatively replaced with a processing module. The processing module is configured to control and manage actions of the data analytics apparatus. For example, the processing module is configured to perform an information/data processing step performed by the data analytics apparatus. The communication module is configured to support the data analytics apparatus in performing a step of sending or receiving information/data. In a possible embodiment, the data analytics apparatus may further include a storage module, configured to store program code and data that can be used by the data analytics apparatus.

The processing module may be a processor or a controller, for example, may be a central processing unit, a general-purpose processor, a digital signal processor, an application-specific integrated circuit, afield programmable gate array or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. The storage module may be a memory.

When the processing module is a processor 51 or a processor 55, the communication module is a communication interface 53, and the storage module is a memory 52, the data analytics apparatus in this application may be the communication device shown in FIG. 5.

FIG. 11 is a schematic diagram of a structure of a chip 150 according to an embodiment of this application. The chip 150 includes one or more (including two) processors 1510 and a communication interface 1530.

Optionally, the chip 150 further includes a memory 1540. The memory 1540 may include a read-only memory and a random access memory, and provide operation instructions and data for the processor 1510. A part of the memory 1540 may further include a non-volatile random access memory (non-volatile random access memory, NVRAM).

In some implementations, the memory 1540 stores the following elements: an executable module or a data structure, a subset thereof, or an extended set thereof.

In this embodiment of this application, a corresponding operation is performed by invoking the operation instructions (where the operation instructions may be stored in an operating system) stored in the memory 1540.

In a possible implementation, structures of chips used by the data analytics network element, the analytics consumer network function network element, and the analytics effect evaluation network element are similar, and different apparatuses may use different chips to implement respective functions.

The processor 1510 controls a processing operation of any one of the data analytics network element, the analytics consumer network function network element, and the analytics effect evaluation network element. The processor 1510 may also be referred to as a central processing unit (central processing unit, CPU).

The memory 1540 may include a read-only memory and a random access memory, and provide instructions and data for the processor 1510. Apart of the memory 1540 may further include an NVRAM. For example, in an application, the processor 1510, the communication interface 1530, and the memory 1540 are coupled together by using a bus system 1520. The bus system 1520 may further include a power bus, a control bus, a status signal bus, and the like in addition to a data bus. However, for clear description, various buses are marked as the bus system 1520 in FIG. 11.

The methods disclosed in the foregoing embodiments of this application may be applied to the processor 1510, or may be implemented by the processor 1510. The processor 1510 may be an integrated circuit chip, and has a signal processing capability. In an implementation process, the steps in the foregoing methods may be implemented by using a hardware integrated logical circuit in the processor 1510, or by using instructions in a form of software. The processor 1510 may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1540, and the processor 1510 reads information in the memory 1540 and completes the steps in the foregoing methods in combination with hardware of the processor 1510.

In a possible implementation, the communication interface 1530 is configured to perform receiving and sending steps of the data analytics network element, the analytics consumer network function network element, and the analytics effect evaluation network element in embodiments shown in FIG. 6 to FIG. 9A and FIG. 9B. The processor 1510 is configured to perform processing steps of the data analytics network element, the analytics consumer network function network element, and the analytics effect evaluation network element in embodiments shown in FIG. 6 to FIG. 9A and FIG. 9B.

The communication unit may be a communication interface of the apparatus, and is configured to receive a signal from another apparatus. For example, when the apparatus is implemented as a chip, the communication unit is a communication interface used by the chip to receive a signal from or send a signal to another chip or apparatus.

According to an aspect, an embodiment of this application may provide a computer-readable storage medium. The computer-readable storage medium stores instructions. When the instructions are run, the functions of the data analytics network element in FIG. 6 are implemented.

In a possible embodiment, when the instructions are run, the functions of the data analytics network element in FIG. 7 to FIG. 9A and FIG. 9B may alternatively be implemented.

According to an aspect, an embodiment of this application may provide a computer-readable storage medium. The computer-readable storage medium stores instructions. When the instructions are run, the functions of the first network element in FIG. 6 are implemented.

In a possible embodiment, when the instructions are run, the computer-readable storage medium may alternatively implement the function of the analytics consumer network function network element in FIG. 7.

In a possible embodiment, when the instructions are run, the computer-readable storage medium may alternatively implement the function of the analytics effect evaluation network element in FIG. 8A and FIG. 8B or FIG. 9A and FIG. 9B.

According to an aspect, a computer program product including instructions is provided. The computer program product includes the instructions, and when the instructions are run, the function of the data analytics network element in FIG. 6 is implemented.

In a possible embodiment, when the instructions are run, the computer program product including the instructions may alternatively implement the function of the data analytics network element in FIG. 7 to FIG. 9A and FIG. 9B.

According to another aspect, a computer program product including instructions is provided. The computer program product includes the instructions, and when the instructions are run, the function of the first network element in FIG. 6 is implemented.

In a possible embodiment, when the instructions are run, the computer program product including the instructions may alternatively implement the function of the analytics consumer network function network element in FIG. 7.

In a possible embodiment, when the instructions are run, the computer program product including the instructions may alternatively implement the function of the analytics effect evaluation network element in FIG. 8A and FIG. 8B or FIG. 9A and FIG. 9B.

According to one aspect, a chip is provided. The chip is used in a data analytics network element. The chip includes at least one processor and a communication interface, the communication interface is coupled to the at least one processor, and the processor is configured to execute instructions, to implement the functions of the data analytics network element in FIG. 6 to FIG. 9A and FIG. 9B.

According to another aspect, a chip is provided. The chip is used in a first network element. The chip includes at least one processor and a communication interface, the communication interface is coupled to the at least one processor, and the processor is configured to execute instructions, to implement the function of the first network element in FIG. 6.

In a possible embodiment, when the processor is configured to execute the instructions, the chip may alternatively implement the function of the analytics consumer network function network element in FIG. 7.

In a possible embodiment, when the processor is configured to execute the instructions, the chip may alternatively implement the function of the analytics effect evaluation network element in FIG. 8A and FIG. 8B or FIG. 9A and FIG. 9B.

An embodiment of this application provides a communication system. The communication system includes a data analytics network element and an analytics consumer network function network element. The data analytics network element is configured to perform any function performed by the data analytics network element in FIG. 6 to FIG. 9A and FIG. 9B, and the analytics consumer network function network element is configured to perform the function performed by the first network element in FIG. 6, or the step performed by the analytics consumer network function network element in FIG. 7.

An embodiment of this application provides a communication system. The communication system includes a data analytics network element and an analytics effect evaluation network element. The data analytics network element is configured to perform any step performed by the data analytics network element in FIG. 6 to FIG. 9A and FIG. 9B, and the analytics effect evaluation network element is configured to perform the step performed by the first network element in FIG. 6, or the step performed by the analytics effect evaluation network element in FIG. 8A and FIG. 8B or FIG. 9A and FIG. 9B.

Optionally, the communication system may further include an analytics consumer network function network element, configured to perform the corresponding functions in FIG. 8A and FIG. 8B to FIG. 9A and FIG. 9B.

All or some of the foregoing embodiments may be implemented by using software, hardware, firmware, or any combination thereof. When the software is used for implementation, all or some of embodiments may be implemented in a form of a computer program product. The computer program product includes one or more computer programs or instructions. When the computer programs or the instructions are loaded and executed on a computer, the procedures or the functions according to embodiments of this application are all or partially implemented. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

Although this application is described with reference to embodiments, in a process of implementing this application that claims protection, persons skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, this specification and the accompanying drawings are merely example descriptions of this application defined by the appended claims, and are considered as any of or all modifications, variations, combinations or equivalents that cover the scope of this application. Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data analytics method, comprising:
receiving, by a data analytics network element from a first network element, effect information of data analytics information; and
determining, by the data analytics network element, updated data analytics information based on the effect information.

2. The method according to claim 1, wherein before the receiving, by a data analytics network element from a first network element, effect information of data analytics information, the method further comprises:
sending, by the data analytics network element, a first message to the first network element, wherein the first message comprises a first indication, and the first indication is used to indicate the first network element to feed back the effect information to the data analytics network element.

3. The method according to claim 2, wherein the first message further comprises one or more of the data analytics information or reporting information, and the reporting information is used to determine a parameter for feeding back the effect information.

4. The method according to claim 2 or 3, wherein the method further comprises:
sending, by the data analytics network element, the updated data analytics information to the first network element.

5. The method according to claim 1, wherein before the receiving, by a data analytics network element from a first network element, effect information of data analytics information, the method further comprises:
sending, by the data analytics network element, a second message to the first network element, wherein the second message is used to request the effect information, the second message comprises one or more of a data analytics identifier or reporting information that correspond to the data analytics information, and the reporting information is used to determine a parameter for feeding back the effect information.

6. The method according to claim 2 or 5, wherein the method further comprises:
receiving, by the data analytics network element from the first network element, a first application scope corresponding to the effect information, wherein the first application scope is a scope that corresponds when the effect information is achieved by using the data analytics information.

7. The method according to claim 5 or 6, wherein the method further comprises:
determining, by the data analytics network element, a second application scope corresponding to the data analytics information, wherein the second application scope is a scope in which the data analytics information is used, and
the second message further comprises the second application scope.

8. The method according to any one of claims 5 to 7, wherein the method further comprises:
sending, by the data analytics network element, the data analytics information to a second network element.

9. The method according to claim 7 or 8, wherein the determining, by the data analytics network element, a second application scope corresponding to the data analytics information comprises:
receiving, by the data analytics network element from the second network element, the second application scope corresponding to the data analytics information.

10. The method according to any one of claims 5 to 9, wherein the second network element is a network element that uses the data analytics information, and the method further comprises:
sending, by the data analytics network element, the updated data analytics information to the second network element.

11. The method according to either claim 3 or 5, wherein the reporting information comprises one or more of the following information: a threshold, a periodicity, a time period, or a maximum quantity of reporting times, wherein
the threshold is used to indicate to send the effect information when the effect information satisfies the threshold,
the periodicity is used to indicate to send the effect information based on the periodicity,
the time period is used to indicate to send the effect information in the time period, and
the maximum quantity of reporting times is used to indicate a maximum quantity of times for which the effect information is sent.

12. The method according to any one of claims 1 to 11, wherein the determining, by the data analytics network element, updated data analytics information based on the effect information comprises:
sending, by the data analytics network element, a third message to a third network element based on the first application scope corresponding to the effect information, wherein the third message is used to request data in the first application scope;
receiving, by the data analytics network element, the data in the first application scope from the third network element; and
determining, by the data analytics network element, the updated data analytics information based on the data in the first application scope.

13. The method according to any one of claims 1 to 12, wherein
when the data analytics identifier corresponding to the data analytics information is mobility of a terminal, the first network element is an access management network element, the second application scope is a first paging area corresponding to the terminal, and the effect information indicates that the access management network element is capable of paging the terminal in a second paging area;
when the data analytics identifier corresponding to the data analytics information is load information of a fourth network element, the first network element is a network repository network element or a network management network element, and the effect information is adjusted load information of the fourth network element or the load information of the fourth network element; or
when the data analytics identifier corresponding to the data analytics information is service experience of a service, the first network element is an application function AF network element, and the effect information is adjusted service experience of the service or that the service experience of the service does not change, wherein the service experience is used to adjust a quality of service QoS parameter of the service.

14. A data analytics apparatus, comprising:
a communication unit, configured to receive, from a first network element, effect information of data analytics information; and
a processing unit, configured to determine updated data analytics information based on the effect information.

15. The apparatus according to claim 14, wherein before the communication unit is configured to receive, from the first network element, the effect information of the data analytics information, the communication unit is further configured to send a first message to the first network element, wherein the first message comprises a first indication, and the first indication is used to indicate the first network element to feed back the effect information to the data analytics network element.

16. The apparatus according to claim 15, wherein the first message further comprises one or more of the data analytics information or reporting information, and the reporting information is used to determine a parameter for feeding back the effect information.

17. The apparatus according to claim 15 or 16, wherein the communication unit is further configured to send the updated data analytics information to the first network element.

18. The apparatus according to claim 14, wherein before the communication unit is configured to receive, from the first network element, the effect information of the data analytics information, the communication unit is further configured to send a second message to the first network element, wherein the second message is used to request the effect information, the second message comprises one or more of a data analytics identifier or reporting information that correspond to the data analytics information, and the reporting information is used to determine a parameter for feeding back the effect information.

19. The apparatus according to claim 15 or 18, wherein the communication unit is further configured to receive, from the first network element, a first application scope corresponding to the effect information, wherein the first application scope is a scope that corresponds when the effect information is achieved by using the data analytics information.

20. The apparatus according to claim 18 or 19, wherein the processing unit is further configured to determine a second application scope corresponding to the data analytics information, wherein the second application scope is a scope in which the data analytics information is used, and
the second message further comprises the second application scope.

21. The apparatus according to any one of claims 18 to 20, wherein the communication unit is further configured to send the data analytics information to a second network element.

22. The apparatus according to claim 20 or 21, wherein the processing unit receives, by using the communication unit from the second network element, the second application scope corresponding to the data analytics information.

23. The apparatus according to any one of claims 18 to 22, wherein the second network element is a network element that executes the data analytics information, and the method further comprises:
sending, by the data analytics network element, the updated data analytics information to the second network element.

24. The apparatus according to either claim 16 or 18, wherein the reporting information comprises one or more of the following information: a threshold, a periodicity, a time period, or a maximum quantity of reporting times, wherein
the threshold is used to indicate to send the effect information when the effect information satisfies the threshold,
the periodicity is used to indicate to send the effect information based on the periodicity,
the time period is used to indicate to send the effect information in the time period, and
the maximum quantity of reporting times is used to indicate a maximum quantity of times for which the effect information is sent.

25. The apparatus according to any one of claims 14 to 24, wherein the processing unit is specifically configured to send a third message to a third network element based on the first application scope corresponding to the effect information, wherein the third message is used to request data in the first application scope;
the communication unit is further configured to receive the data in the first application scope from the third network element; and
the processing unit is configured to determine the updated data analytics information based on the data in the first application scope.

26. The apparatus according to any one of claims 14 to 25, wherein
when the data analytics identifier corresponding to the data analytics information is mobility of a terminal, the first network element is an access management network element, the second application scope is a first paging area corresponding to the terminal, and the effect information indicates that the access management network element is capable of paging the terminal in a second paging area;
when the data analytics identifier corresponding to the data analytics information is load information of a fourth network element, the first network element is a network repository network element or a network management network element, and the effect information is adjusted load information of the fourth network element or the load information of the fourth network element; or
when the data analytics identifier corresponding to the data analytics information is service experience of a service, the first network element is an application function AF network element, and the effect information is adjusted service experience of the service or that the service experience of the service does not change, wherein the service experience is used to adjust a quality of service QoS parameter of the service.

27. A computer-readable storage medium, wherein the readable storage medium stores instructions, and when the instructions are executed, the method according to any one of claims 1 to 13 is implemented.

28. A chip, wherein the chip comprises a processor and a communication interface, the communication interface is coupled to the processor, the processor is configured to execute a computer program or instructions, to implement the method according to any one of claims 1 to 13, and the communication interface is configured to communicate with a module other than the chip.

29. A data analytics apparatus, comprising a processor, wherein the processor is coupled to a memory, and the processor is configured to execute instructions stored in the memory, to perform the method according to any one of claims 1 to 13.

30. A communication system, wherein the system comprises: a data analytics network element, configured to perform an operation of the data analytics network element in the method according to any one of claims 1 to 13; and
a first network element, configured to determine effect information corresponding to data analytics information, and send the effect information to the data analytics network element.

31. A data analytics apparatus, wherein the apparatus comprises at least one processor, and the at least one processor is configured to execute computer instructions or a program stored in a memory, to implement the method according to any one of claims 1 to 13.
